# EUROPEAN PATENT APPLICATION

(11) **EP 4 601 313 A1**
(43) Date of publication of application: **13.08.2025**
(21) Application number: 23886190.0
(22) Date of filing: 30.10.2023
(51) Int. Cl.: H04N 23/951, H04N 23/54, H04N 23/73, H04N 23/71, H04N 5/265

(54) **ELECTRONIC DEVICE AND METHOD FOR ACQUIRING IMAGE DATA ON BASIS OF COMPOSITING IMAGES**

(30) Priority: 01.11.2022 KR 20220144089; 08.12.2022 KR 20220171022
(71) Applicant: Samsung Electronics Co., Ltd., Suwon-si, Gyeonggi-do 16677 (KR)
(72) Inventor: KIM, Seunghun, Suwon-si Gyeonggi-do 16677 (KR); PARK, Jiyoon, Suwon-si Gyeonggi-do 16677 (KR)
(74) Representative: Gulde & Partner
(86) International application number: PCT/KR2023/017038
(87) International publication number: WO 2024/096494

(57) **Abstract**

An electronic device, according to one embodiment, comprises: a camera including an image sensor; a memory; and a processor operatively connected to the camera and the memory. The processor is configured to identify the maximum exposure time of the camera as a first time period, on the basis of capability information of the image sensor. The processor is configured to acquire a first image by using the camera, on the basis of the exposure time set as the first time period. The processor is configured to identify a second image constituting a first frame stored in the memory. The processor is configured to acquire a third image on the basis of compositing the first image and the second image. The processor is configured to acquire image data consisting of a plurality of frames including the first frame and a second frame, on the basis of constituting the third image as the second frame which is the next frame after the first frame.

## Description

### [Technical Field]

The following descriptions relate to an electronic device and a method for obtaining video data based on synthesizing images.

### [Background Art]

As technology advances, an electronic device may obtain video data through various photographing techniques. For example, the electronic device may generate video data by compressing a video recorded over a long duration into a relatively short duration. As the generated video data is configured with a relatively short duration, it may be configured with a smaller size than a normal video of the same photographing time.

### [Disclosure]

### [Technical Solution]

According to an embodiment, an electronic device may comprise a camera including an image sensor, memory, and a processor operably coupled with the camera and the memory. The processor may be configured to identify, based on capability information of the image sensor, maximum exposure time of the camera as a first time interval. The processor may be configured to obtain, based on exposure time set as the first time interval, a first image using the camera. The processor may be configured to identify a second image constituting a first frame stored in the memory. The processor may be configured to obtain, based on synthesizing the first image and the second image, a third image. The processor may be configured to, based on configuring the third image as a second frame which is next frame after the first frame, obtain video data consisting of a plurality of fames including the first frame and the second frame.

According to an embodiment, a method of an electronic device may comprise identifying, based on capability information of an image sensor of a camera of the electronic device, maximum exposure time of the camera as a first time interval. The method may comprise obtaining, based on exposure time set as the first time interval, a first image using the camera. The method may comprise identifying a second image constituting a first frame stored in memory of the electronic device. The method may comprise obtaining, based on synthesizing the first image and the second image, a third image. The method may comprise, based on configuring the third image as a second frame which is next frame after the first frame, obtaining video data consisting of a plurality of fames including the first frame and the second frame.

### [Description of the Drawings]

FIG. 1 is a block diagram of an electronic device in a network environment according to an embodiment.
FIG. 2 illustrates an example of simplified block diagrams of an electronic device according to an embodiment.
FIG. 3 illustrates an example of an operation of an electronic device according to an embodiment.
FIG. 4 is a flowchart illustrating an operation of an electronic device according to an embodiment.
FIG. 5 is a flowchart illustrating an operation of an electronic device according to an embodiment.
FIGS. 6A to 6C illustrate an example of an operation of an electronic device according to an embodiment.
FIGS. 7A and 7B illustrate an example of an operation of an electronic device according to an embodiment.
FIG. 8 is a flowchart illustrating an operation of an electronic device according to an embodiment.
FIG. 9 is a flowchart illustrating an operation of an electronic device according to an embodiment.
FIG. 10 illustrates an example of an operation of an electronic device according to an embodiment.
FIG. 11 is a flowchart illustrating an operation of an electronic device according to an embodiment.
FIG. 12 is a flowchart illustrating an operation of an electronic device, according to an embodiment.
FIGS. 13A and 13B illustrate an example of an operation of an electronic device according to an embodiment.
FIG. 14 is a flowchart illustrating an operation of an electronic device according to an embodiment.
FIG. 15 illustrates an example of an operation of an electronic device according to an embodiment.
FIG. 16 is a flowchart illustrating an operation of an electronic device, according to an embodiment.
FIG. 17A illustrates an example of an operation of an electronic device according to an embodiment.
FIG. 17B illustrates an example of an operation of an electronic device according to an embodiment.

### [Mode for Invention]

Hereinafter, embodiments of the present disclosure will be described in detail with reference to drawings so that those having ordinary knowledge in the art to which the present disclosure belongs may easily implement it. However, the present disclosure may be implemented in various different forms and is not limited to the embodiments described herein. In relation to the description of the drawings, identical or similar reference numerals may be used for identical or similar components. In addition, in the drawings and related descriptions, descriptions of well-known features and configurations may be omitted for clarity and brevity.

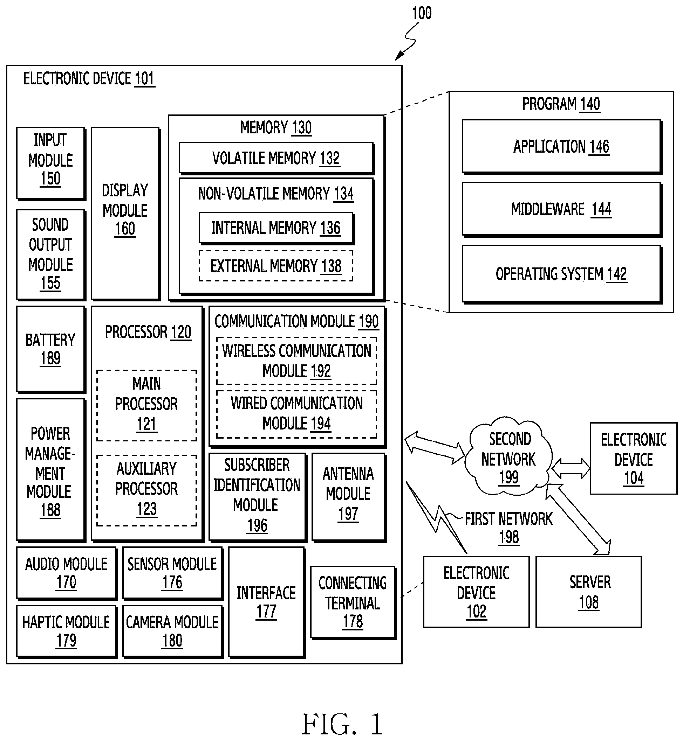

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

According to an embodiment, an electronic device (e.g., the electronic device 101) may obtain video data by compressing images (or video) taken for a long time to a short time. The electronic device may obtain video data including a visual object indicating an external object (e.g., a star). The electronic device may obtain video data indicating a trajectory of an external object (e.g., a star) based on synthesizing images taken for a long time. In the following specification, technical features for obtaining video data indicating a trajectory of an external object (e.g., a star) may be described.

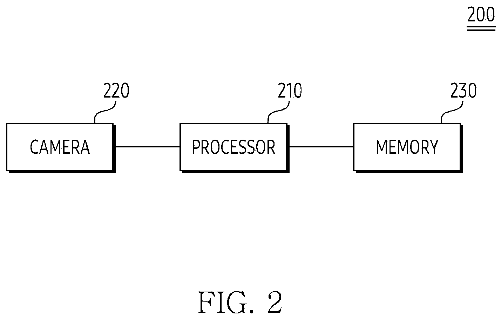

FIG. 2 illustrates an example of simplified block diagrams of an electronic device according to an embodiment.

Referring to FIG. 2, the electronic device 200 may include some or all of components of the electronic device 101 illustrated in FIG. 1. For example, the electronic device 200 may correspond to the electronic device 101 of FIG. 1.

According to an embodiment, the electronic device 200 may include a processor 210, a camera 220, and/or memory 230. According to an embodiment, the electronic device 200 may include at least one of the processor 210, the camera 220, and the memory 230. For example, at least a portion of the processor 210, the camera 220, and the memory 230 may be omitted according to an embodiment.

According to an embodiment, the electronic device 200 may include a processor 210. The processor 210 may be operably coupled or connected with the camera 220 and the memory 230. The processor 210 being operably coupled or connected with the camera 220 and the memory 230 may mean that the processor 210 may control the camera 220 and the memory 230.

For example, the processor 210 may control the camera 220 and the memory 230. The camera 220 and the memory 230 may be controlled by the processor 210. For example, the processor 210 may be configured with at least one processor. For example, the processor 210 may include at least one processor. For example, the processor 210 may correspond to the processor 120 of FIG. 1.

According to an embodiment, the processor 210 may include a hardware component for processing data based on one or more instructions. The hardware component for processing data may include, for example, an arithmetic and logic unit (ALU), a field programmable gate array (FPGA), and/or a central processing unit (CPU).

According to an embodiment, the electronic device 200 may include the camera 220. For example, the camera 220 may be used to obtain image or video data of an external object. For example, image data (and/or photograph) captured using the camera 220 may mean one image obtained from the camera 220. For example, video data captured using the camera 220 may mean a sequence of a plurality of images obtained from the camera 220 according to a designated frame rate. For example, the camera 220 may at least partially correspond to the camera module 180 of FIG. 1.

For example, the camera 220 may include at least one sensor. The at least one sensor may include an image sensor (or an optical sensor). The image sensor may be used to obtain an image, based on processing data obtained through the camera 220 (e.g., a lens of the camera 220). The image sensor may convert light received through a lens of the camera 220 into an electrical signal. For example, the image sensor may include at least one of a charge-coupled device (CCD) image sensor and a complementary metal oxide semiconductor (CMOS) image sensor. According to an embodiment, the processor 210 may identify a maximum exposure time of the camera 220 based on capability information of the image sensor.

According to an embodiment, the electronic device 200 may include the memory 230. For example, the memory 230 may be used to store one or more programs. The one or more programs may include instructions which, when executed by the processor 210 of the electronic device 200, cause the electronic device 200 to perform a predefined operation. For example, the memory 230 may correspond to the memory 130 of FIG. 1. For example, the memory 230 may be a volatile memory unit or units. For example, the memory 230 may be a nonvolatile memory unit or units. For example, the memory 230 may be another type of computer-readable medium, such as a magnetic or optical disk. For example, the memory 230 may store data obtained based on an operation (e.g., an operation of executing an algorithm) performed by the processor 210.

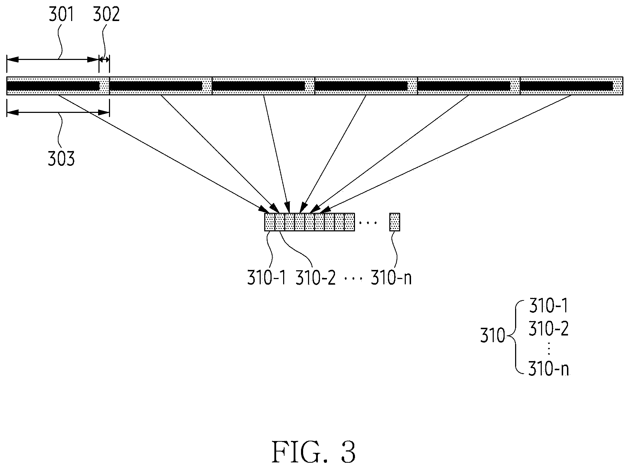

FIG. 3 illustrates an example of an operation of an electronic device according to an embodiment. Operations of FIG. 3 may be performed by the processor 210 of the electronic device 200 illustrated in FIG. 2.

Referring to FIG. 3, the processor 210 of the electronic device 200 may obtain hyper-lapse (or time-lapse) video data. The hyper-lapse video data may refer to video data in which at least one image (or frame) taken for a relatively long time through a camera (e.g., the camera 220 of FIG. 2) is processed to be played for a relatively short time. The processor 210 may obtain the hyper-lapse video data by processing at least one image (or frame) taken for a relatively long time through the camera 220 to be played for a relatively short time.

According to an embodiment, the processor 210 may set an exposure time of the camera 220 as a time interval 301. The processor 210 may process data obtained using the camera 220 for a time interval 302, based on the exposure time set as the time interval 301. The processor 210 may obtain a first image by processing the data for the time interval 302. The processor 210 may set the first image as a first frame 310-1. For example, the time interval 302 may include a waiting time for resetting an image sensor to read next frame. For example, the time interval 302 may include a readout time for converting light into an electrical signal or outputting the converted electrical signal. For example, the time interval 302 may be changed based on the time interval 301.

According to an embodiment, the processor 210 may set a plurality of frames 310, like the first frame 310-1. The plurality of frames 310 may consist of video data (e.g., hyper-lapse video data). For example, the processor 210 may configure one frame per a time interval 303 including the time interval 301 and the time interval 302. For example, when the time interval 303 is 0.5 seconds, one frame per 0.5 second may be configured. According to an embodiment, video data consisting of the plurality of frames 310 may be set to be played at 30 frames per second. For example, video data may be played at 30 frame per second (fps). Accordingly, a video played for 1 second in video data may indicate an actual time of 15 seconds. In other words, the processor 210 may configure video data at a 15-times speed.

According to an embodiment, the processor 210 may reset an image sensor included in the camera 220 after the time interval 303 has elapsed. The processor 210 may reset the image sensor to obtain a second image distinct from the first image and set the second image as a frame 310-2.

According to an embodiment, the processor 210 may change exposure time of the camera 220. The processor 210 may increase the amount of light for obtaining an image, by setting the exposure time of the camera 220 to be long in a dark environment. According to an embodiment, the processor 210 may change light sensitivity (e.g., an international standard organization (ISO) value). The processor 210 may set a brightness value of the obtained image to be high by setting the light sensitivity of the camera 220 to be high in a dark environment.

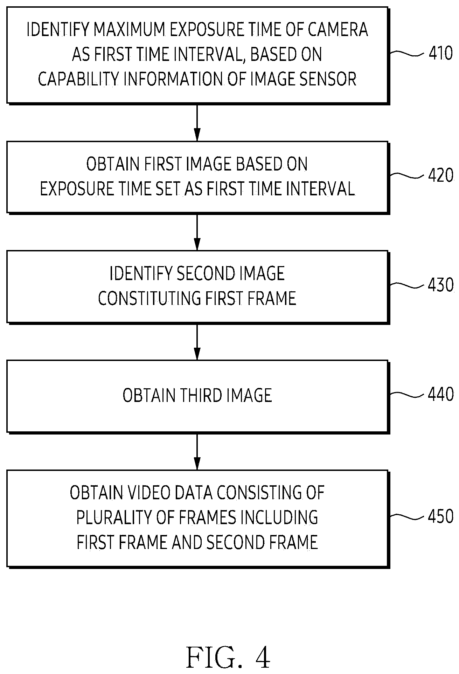

FIG. 4 is a flowchart illustrating an operation of an electronic device according to an embodiment. Operations of FIG. 4 may be performed by the processor 210 of the electronic device 200 illustrated in FIG. 2. Operations 410 to 450 may be related to an operation for obtaining video data.

In the following embodiment, each operation may be performed sequentially, but is not necessarily performed sequentially. For example, the sequence of each operation may be changed, and at least two operations may be performed in parallel.

Referring to FIG. 4, in operation 410, the processor 210 may identify a maximum exposure time of the camera 220 as a first time interval, based on capability information of an image sensor.

According to an embodiment, the processor 210 may identify capability information of an image sensor of the camera 220. The processor 210 may identify a maximum exposure time of the camera 220 capable of being processed by the image sensor. The processor 210 may identify the maximum exposure time of the camera 220 as a first time interval.

In operation 420, the processor 210 may obtain a first image based on the exposure time set as the first time interval. For example, the processor 210 may obtain the first image based on the exposure time set as the first time, using the camera 220.

According to an embodiment, the processor 210 may set the exposure time of the camera 220 as the first time interval, which is the maximum exposure time of the camera 220. The processor 210 may obtain a first image, by processing data obtained using the camera 220, based on the exposure time set as the first time interval, during a second time interval distinguished from the first time interval. For example, the processor 210 may obtain the first image while generating (or obtaining) video data consisting of a plurality of frames. The processor 210 may obtain video data consisting of a plurality of frames, based on configuring one frame per a third time interval including the first time interval and the second time interval. For example, the video data may be set to be played at 30 frames per second. For example, the video data may be set to 30 frame per second (fps).

In operation 430, the processor 210 may identify the second image constituting the first frame. For example, the processor 210 may obtain the second image before obtaining the first image. The processor 210 may configure the second image as a first frame among a plurality of frames. According to an embodiment, the second image may be an image in which a plurality of images is synthesized. According to an embodiment, the second image may be obtained according to the same or similar operation as operations 410 to 420.

In operation 440, the processor 210 may obtain a third image. For example, the processor 210 may obtain the third image, based on synthesizing the first image and the second image.

According to an embodiment, the processor 210 may obtain the third image by synthesizing the second image constituting the first frame and the first image obtained after constituting the first frame. For example, the processor 210 may identify a first visual object corresponding to an external object (e.g., a star) among a plurality of objects included in the first image. The processor 210 may identify a second visual object corresponding to an external object (e.g., a star) among a plurality of objects included in the second image. The processor 210 may obtain a third image including the first visual object and the second visual object based on synthesizing the first image and the second image. For example, the third image may represent a trajectory of an external object.

In operation 450, the processor 210 may obtain video data consisting of a plurality of frames including a first frame and a second frame. For example, the processor 210 may obtain video data consisting of a plurality of frames including the first frame and the second frame, based on configuring the third image as the second frame, which is next frame after the first frame.

According to an embodiment, the processor 210 may configure the third image as the second frame, which is next frame after the first frame. The processor 210 may configure the third image, in which the first image and the second image are synthesized, as a second frame, which is next frame after the first frame consisting of the second image so that a trajectory of an external object (e.g., a star) may appear, through video data. As the third image is configured as the second frame, a trajectory of an external object (e.g., a star) over time may be represented by video data. For example, as the second frame is sequentially displayed (or played) following the first frame, a trajectory of an external object (e.g., a star) in the third time interval, including the first time interval and the second time interval, may be displayed.

According to an embodiment, after the third image is configured as the second frame, the processor 210 may obtain a fourth image by using the camera 220, based on the exposure time set as the first time interval. Based on identifying that a brightness value related to the fourth image is greater than or equal to a designated brightness value, the processor 210 may configure the fourth image as a third frame, which is the next frame after the second frame. For example, the processor 210 may refrain from synthesizing the fourth image with the third image constituting the second frame, based on identifying that the brightness value of the fourth image is greater than or equal to a designated brightness value. The processor 210 may configure the fourth image as the third frame without synthesizing the fourth image with the third image. For example, when a brightness value of the fourth image is greater than or equal to a designated brightness value, a trajectory of an external object (e.g., a star) may not be identified. By resetting an image synthesis process, the processor 210 may configure the fourth image as the third frame without synthesizing the fourth image with the third image.

According to an embodiment, the processor 210 may refrain from synthesizing the second image with the first image, based on identifying that a brightness value of the second image is greater than or equal to a designated brightness value.

According to an embodiment, after the third image is configured as the second frame, the processor 210 may obtain the fourth image by using the camera 220, based on the exposure time set as the first time interval. The processor 210 may store a fifth image obtained based on synthesizing the third image and the fourth image in the memory 230 (or a buffer of the memory 230). After the fifth image is stored, the processor 210 may obtain a sixth image by using the camera 220, based on the exposure time set as the first time interval. Based on synthesizing the fifth image and the sixth image, the processor 210 may obtain a seventh image. The processor 210 may configure the seventh image as the third frame, which is the next frame after the second frame.

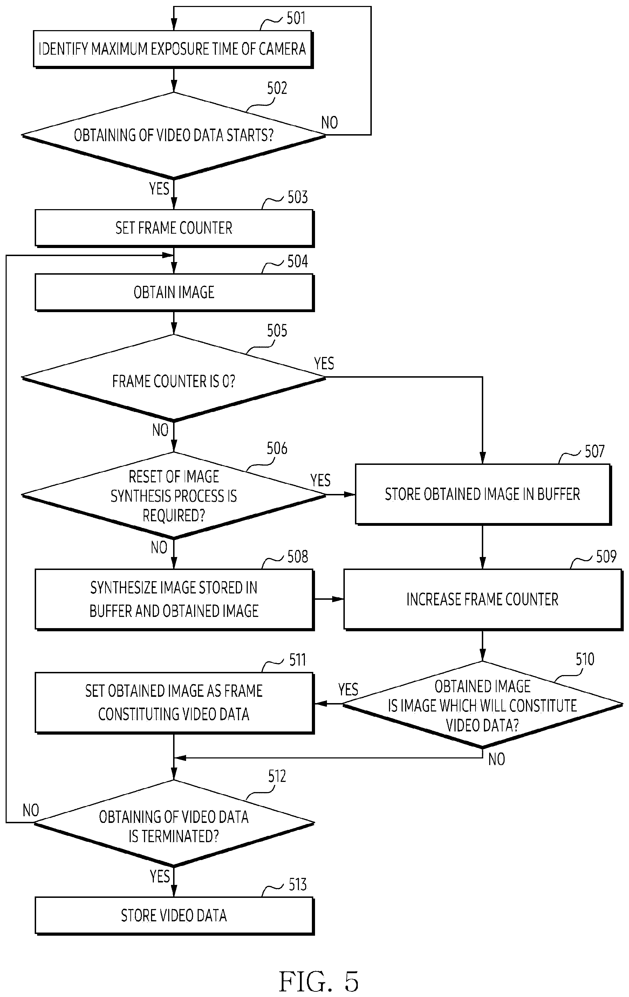

FIG. 5 is a flowchart illustrating an operation of an electronic device according to an embodiment. Operations of FIG. 5 may be performed by the processor 210 of the electronic device 200 illustrated in FIG. 2. Operations 501 to 513 may be related to an operation for obtaining (or storing) video data.

In the following embodiment, each operation may be performed sequentially, but is not necessarily performed sequentially. For example, the sequence of each operation may be changed, and at least two operations may be performed in parallel.

Referring to FIG. 5, in operation 501, the processor 210 may identify a maximum exposure time of a camera (e.g., the camera 220 of FIG. 2). For example, the processor 210 may identify the maximum exposure time of the camera 220, based on capability information of an image sensor included in the camera 220. The processor 210 may determine (or identify) a speed of video data compared to an actual time, based on the maximum exposure time of the camera 220.

In operation 502, the processor 210 may identify whether the obtaining of video data starts. For example, the processor 210 may start obtaining video data, based on a user input. The processor 210 may identify whether a user input to start the obtaining of video data is received.

According to an embodiment, when the obtaining of video data does not start (operation 502-NO), the processor 210 may perform operation 501. The processor 210 may wait for a user input to start the obtaining of video data.

In operation 503, when the obtaining of video data starts (operation 502-YES), the processor 210 may set a frame counter. For example, the processor 210 may set the frame counter based on the start of obtaining video data. The processor 210 may set the frame counter to 0.

According to an embodiment, when the obtaining of video data starts, the processor 210 may execute (or activate) a video codec for performing a video synthesis process.

In operation 504, the processor 210 may obtain an image. For example, the processor 210 may obtain an image based on the exposure time of the camera 220 which is set to a maximum exposure time. Operation 504 may correspond to operation 420 of FIG. 4.

In operation 505, the processor 210 may identify whether the frame counter is 0. The processor 210 may identify whether the frame counter is 0 to identify whether it is a first frame for obtaining video data.

In operation 506, when the frame counter is not 0 (operation 505-NO), the processor 210 may identify whether a reset of the image synthesis process is required. For example, the processor 210 may identify whether a reset of the image synthesis process is required, based on identifying that the frame counter is not 0.

According to an embodiment, the processor 210 may determine whether a reset of the image synthesis process is required, according to a designated condition. For example, the processor 210 may determine that a reset of the image synthesis process is required, based on identifying that a brightness value of the obtained image is greater than or equal to a designated brightness value.

In operation 507, when the frame counter is 0 (operation 505-YES) or a reset of the image process is required (operation 506-YES), the processor 210 may store the obtained image in a buffer. For example, the processor 210 may store the obtained image in a buffer configured in the memory (e.g., the memory 230 of FIG. 2), based on identifying that the frame counter is 0. For example, the processor 210 may store the obtained image in a buffer configured in the memory 230, based on identifying that a reset of the image process is required.

In operation 508, when a reset of the image synthesis process is not required (operation 506-NO), the processor 210 may synthesize the image stored in the buffer and the obtained image. For example, the processor 210 may synthesize the image stored in the buffer and the obtained image, based on identifying that a reset of the image synthesis process is not required. The processor 210 may store the synthesized image in a buffer.

In operation 509, the processor 210 may increase the frame counter. For example, the processor 210 may increase the frame counter by 1. For example, the processor 210 may store the obtained image in the buffer or store the synthesized image in the buffer, and then increase the frame counter by 1.

In operation 510, the processor 210 may identify whether the obtained image (or the synthesized image) is an image which will constitute video data. For example, the processor 210 may identify whether the obtained image (or synthesized image) is an image which will constitute video data based on the frame counter.

According to an embodiment, the processor 210 may identify the obtained image as an image which will constitute video data, based on the frame counter being odd (or even). According to an embodiment, the processor 210 may identify the obtained image as an image which will constitute video data, based on the frame counter being one of reference values. According to an embodiment, the processor 210 may change a sampling period based on the number of frame counters. For example, the processor 210 may configure one frame, by obtaining a designated number (or number according to the sampling period) of images and then synthesizing the designated number of images.

In operation 511, when the obtained image (or synthesized image) is an image which will constitute video data (operation 510-YES), the processor 210 may set the obtained image (or synthesized image) as a frame constituting the video data. For example, the processor 210 may set the obtained image as a frame constituting the video data, based on identifying that the obtained image is an image which will constitute video data. For example, the processor 210 may set the obtained image as one of a plurality of frames constituting video data.

In operation 512, the processor 210 may identify whether the obtaining of video data is terminated. For example, after setting the obtained image as a frame constituting video data, the processor 210 may identify whether the obtaining of video data is terminated. For example, the processor 210 may identify whether the obtaining of video data is terminated, based on identifying that the obtained image is not an image which will constitute video data.

According to an embodiment, the processor 210 may identify whether the obtaining of video data is terminated, based on whether another user input distinct from the user input for starting the obtaining of video data is received.

According to an embodiment, when the obtaining of video data is not terminated (operation 512-NO), the processor 210 may perform operation 504. For example, the processor 210 may obtain another image according to operation 504, in order to add a frame of video data, based on identifying that the obtaining of video data is not terminated.

In operation 513, when the obtaining of video data is terminated (operation 512-YES), the processor 210 may store video data in the memory 230. For example, the processor 210 may store the video data in the memory 230, based on identifying that the obtaining of the video data is terminated. For example, the processor 210 may store video data in the memory 230, based on receiving another user input to terminate the obtaining of video data.

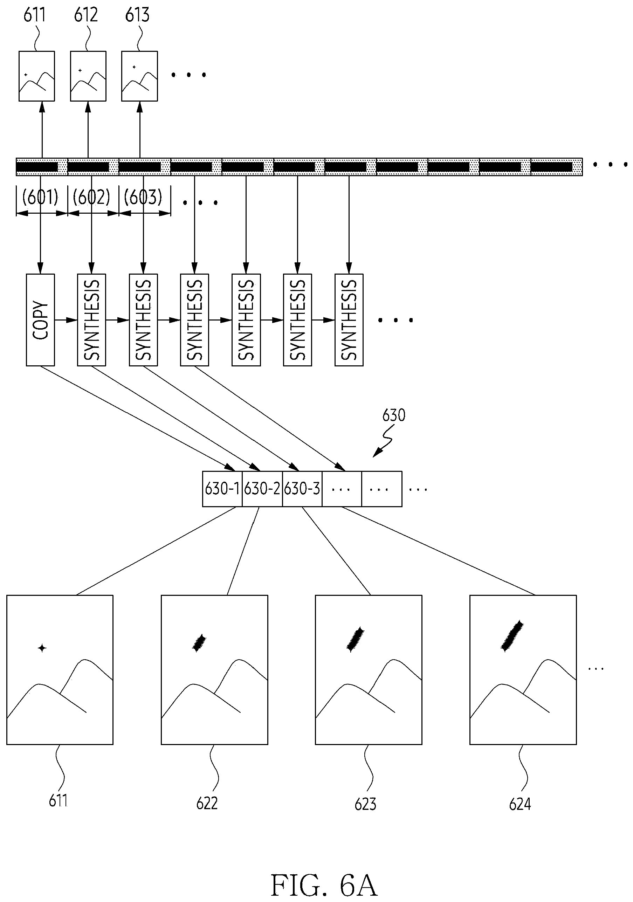

FIGS. 6A to 6C illustrate an example of an operation of an electronic device according to an embodiment. Operations of FIGS. 6A to 6C may be performed by the processor 210 of the electronic device 200 illustrated in FIG. 2.

Referring to FIG. 6A, the processor 210 may obtain an image 611 within a time interval 601. The processor 210 may set the image 611 as a frame 630-1 which is a first frame among a plurality of frames 630. The processor 210 may store the image 611 in a buffer of memory (e.g., the memory 230 of FIG. 2).

According to an embodiment, the processor 210 may obtain an image 612 within a time interval 602. The processor 210 may obtain an image 622 by synthesizing the image 611 stored in the buffer and the image 612. The processor 210 may set the image 622 as a frame 630-2 which is a second frame among the plurality of frames 630. The processor 210 may store the image 622 in the buffer of the memory 230.

According to an embodiment, the processor 210 may obtain an image 613 within a time interval 603. The processor 210 may obtain an image 623 by synthesizing the image 622 stored in the buffer and the image 613. For example, the processor 210 may obtain the image 623 by synthesizing images 611 to 613. The processor 210 may set the image 623 as a frame 630-3 which is a third frame among the plurality of frames 630. The processor 210 may store the image 623 in the buffer of the memory 230.

According to an embodiment, the processor 210 may identify (or obtain) the plurality of frames 630 configured with a plurality of images including the image 611, the image 622, and the image 623 by repeating the above-described operation. The processor 210 may obtain video data configured with the plurality of frames 630, and store the obtained video data in the memory 230.

According to an embodiment, the processor 210 may accumulate and synthesize a plurality of images, and set the synthesized image as one of a plurality of frames constituting video data. The processor 210 may represent a trajectory of an external object through video data, by setting the synthesized image as one of a plurality of frames constituting data.

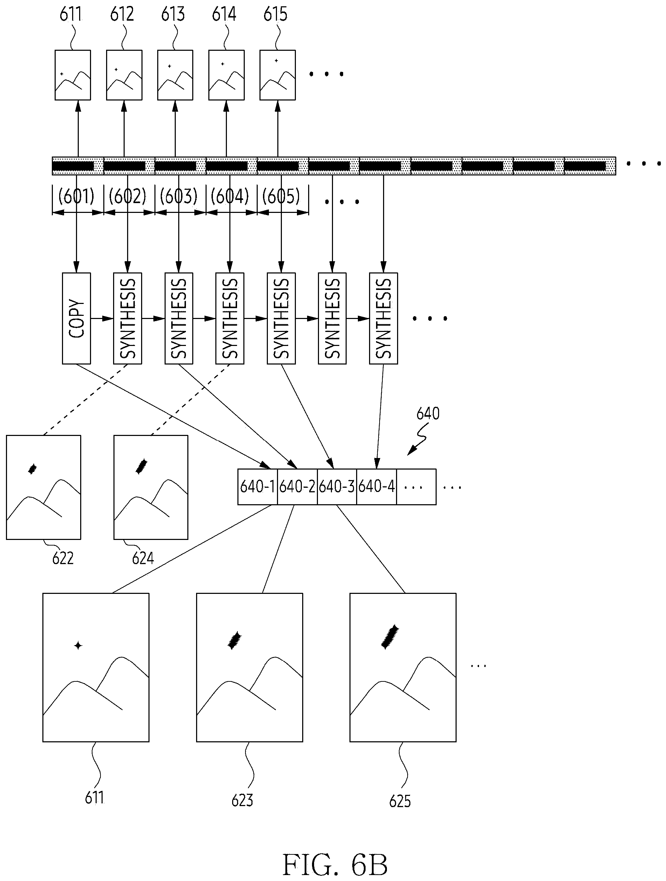

Referring to FIG. 6B, the processor 210 may obtain an image 611 within a time interval 601. The processor 210 may set the image 611 as a frame 640-1 which is a first frame among a plurality of frames 640. The processor 210 may store the image 611 in a buffer of the memory 230.

The processor 210 may obtain an image 612 within a time interval 602. The processor 210 may obtain an image 622 by synthesizing the image 611 stored in the buffer and the image 612. The processor 210 may store the image 622 in the buffer of the memory 230. The processor 210 may not configure the image 622 as a frame of video data. The processor 210 may configure only images that are obtained in odd-numbered order as frames of video data.

According to an embodiment, the processor 210 may obtain an image 613 within a time interval 603. The processor 210 may obtain an image 623 by synthesizing the image 622 stored in the buffer and the image 613. For example, the processor 210 may obtain the image 623 by synthesizing images 611 to 613. The processor 210 may set the image 623 as a frame 640-2 which is a second frame among the plurality of frames 640. The processor 210 may store the image 623 in the buffer of the memory 230.

According to an embodiment, the processor 210 may identify (or obtain) the plurality of frames 640 configured with a plurality of images including the image 611, the image 623, and an image 625 by repeating the above-described operation. The processor 210 may obtain video data configured with the plurality of frames 640, and store the obtained video data in the memory 230.

According to an embodiment, the processor 210 may set at least a portion of the obtained images as frames of video data. The processor 210 may represent a trajectory of an external object through video data, by setting at least a portion of the obtained images as frames of video data.

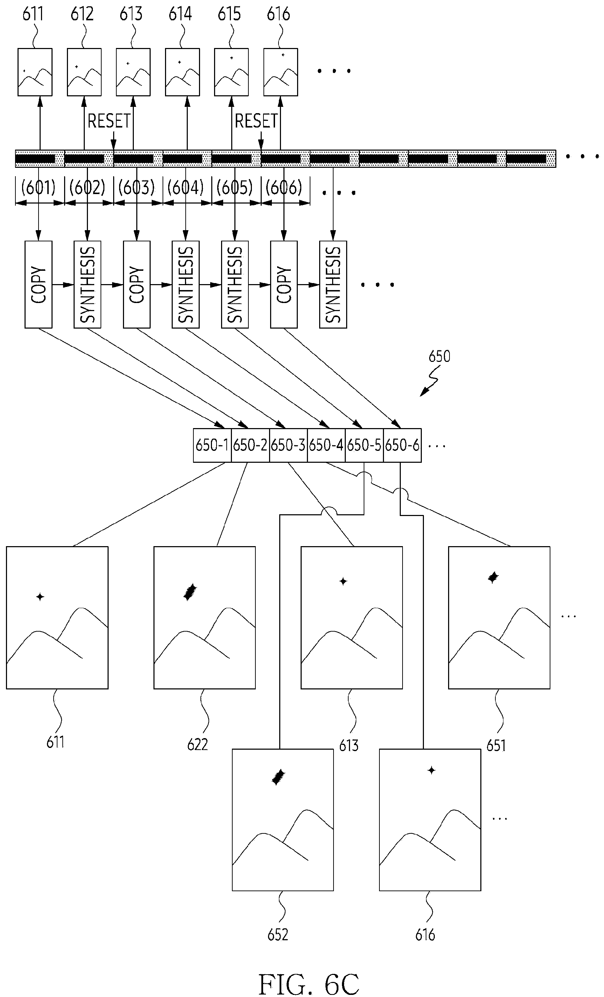

Referring to FIG. 6C, the processor 210 may obtain an image 611 within a time interval 601. The processor 210 may set the image 611 as a frame 650-1 which is a first frame among a plurality of frames 650. The processor 210 may store the image 611 in a buffer of the memory 230.

According to an embodiment, the processor 210 may obtain an image 612 within a time interval 602. The processor 210 may obtain the image 622 by synthesizing the image 611 stored in the buffer and the image 612. The processor 210 may set the image 622 as a frame 650-2 which is a second frame among a plurality of frames 650. The processor 210 may store the image 622 in the buffer of the memory 230.

According to an embodiment, the processor 210 may obtain an image 613 within a time interval 603. The processor 210 may identify a brightness value for the image 613. The processor 210 may identify that a brightness value for the image 613 is greater than or equal to a designated brightness value. The processor 210 may reset an image synthesis process, based on identifying that the brightness value for the image 613 is greater than or equal to the designated brightness value. The processor 210 may set the image 613 as a frame 650-3 which is a third frame among the plurality of frames 650. The processor 210 may store the image 613 in the buffer of the memory 230.

By repeating the above-described operation, the processor 210 may identify an image 651, based on synthesizing an image 614 obtained within a time interval 604 and the image 613. The processor 210 may set the image 651 as a frame 650-4. The processor 210 may store the image 651 in the buffer of the memory 230.

According to an embodiment, the processor 210 may identify an image 652, based on synthesizing an image 615 obtained within a time interval 605 and the image 651. The processor 210 may set the image 652 as a frame 650-5. The processor 210 may store the image 652 in the buffer of the memory 230.

According to an embodiment, the processor 210 may obtain an image 616 within a time interval 606. The processor 210 may identify a brightness value for the image 616. The processor 210 may identify that the brightness value for the image 616 is greater than or equal to a designated brightness value. The processor 210 may reset the image synthesis process, based on identifying that the brightness value for the image 616 is greater than or equal to the designated brightness value. The processor 210 may set the image 616 as a frame 650-6. The processor 210 may store the image 616 in the buffer of the memory 230.

According to an embodiment, the processor 210 may reset the image synthesis process based on identifying that a brightness value for an obtained image is greater than or equal to a designated brightness value. By resetting the image synthesis process, the processor 210 may identify the plurality of frames 650, by performing the image synthesis process from the obtained image.

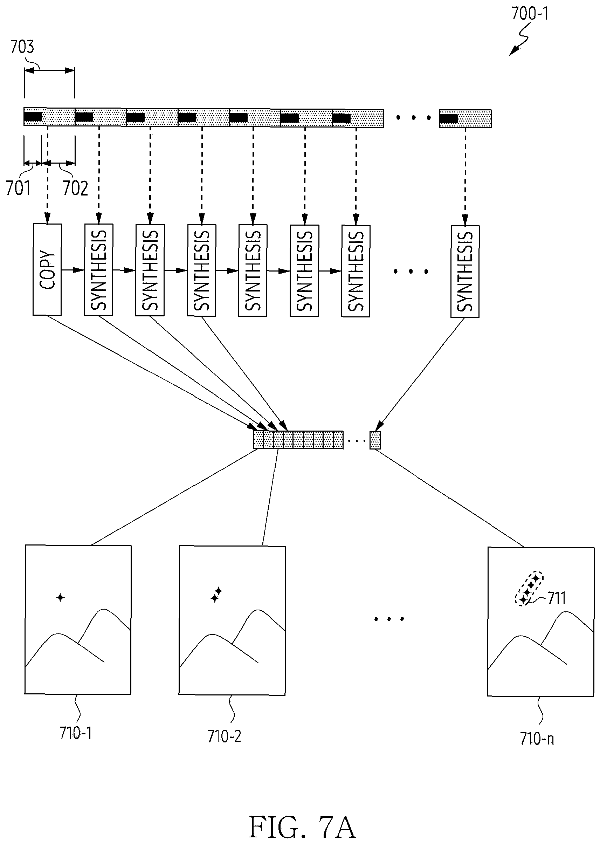

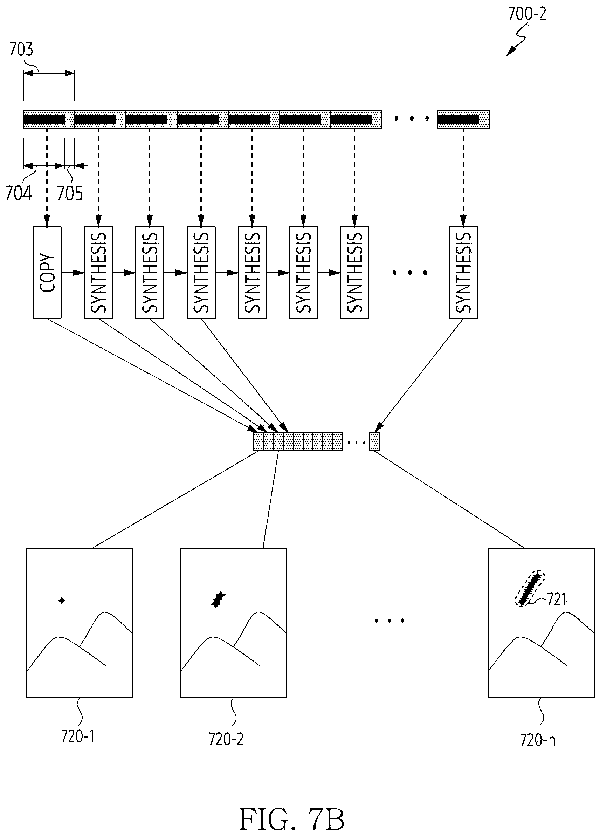

FIGS. 7A and 7B illustrate an example of an operation of an electronic device according to an embodiment. Operations of FIGS. 7A and 7B may be performed by the processor 210 of the electronic device 200 illustrated in FIG. 2.

Referring to FIG. 7A, in a state 700-1, the processor 210 may set an exposure time of the camera 220 as a time interval 701. For example, the time interval 701 may be less than a maximum exposure time of the camera 220. The processor 210 may obtain an image 710-1 by processing data obtained during the time interval 701, at a time interval 702. The processor 210 may set the image 710-1 as a first frame among a plurality of frames. The processor 210 may configure one frame during a time interval 703. As in operation of FIG. 6A, the processor 210 may obtain an image 710-2 by synthesizing the image 710-1 and a newly obtained image. The processor 210 may identify an image 710-n by accumulating and synthesizing obtained images.

According to an embodiment, the image 710-n may include a visual object 711 indicating a trajectory of an external object. The trajectory of the external object may not be continuously displayed in the visual object 711.

Referring to FIG. 7B, in a state 700-2, the processor 210 may set an exposure time of the camera 220 as a time interval 704. For example, the time interval 704 may be a maximum exposure time of the camera 220 identified based on capability information of an image sensor of the camera 220. The processor 210 may obtain an image 720-1 by processing data obtained during the time interval 704, at a time interval 705. The processor 210 may set the image 720-1 as a first frame among a plurality of frames. The processor 210 may configure one frame during the time interval 703. As in operation of FIG. 6A, the processor 210 may obtain an image 720-2 by synthesizing the image 720-1 and a newly obtained image. The processor 210 may identify an image 720-n by accumulating and synthesizing obtained images.

According to an embodiment, the image 720-n may include a visual object 721 indicating a trajectory of an external object. The trajectory of the external object may be continuously displayed in the visual object 721.

Referring to FIGS. 7A and 7B, the processor 210 may differently set the exposure time of the camera 220, within the same time interval 703. When the exposure time of the camera 220 is set to the maximum exposure time of the camera 220, the processor 210 may obtain an image (e.g., the image 720-n) in which a trajectory of an external object (e.g., a star) is continuously displayed.

According to an embodiment, the processor 210 may identify the maximum exposure time of the camera 220, based on capability information of an image sensor included in the camera 220. In addition, the processor 210 may set a time for processing data obtained during an exposure time of the camera 220 to a minimum time. For example, the processor 210 may set the exposure time of the camera 220 to the maximum exposure time, and set a time for processing data obtained during the exposure time of the camera 220 to the minimum time. In this case, the processor 210 may identify an image in which a trajectory of an external object is continuously displayed.

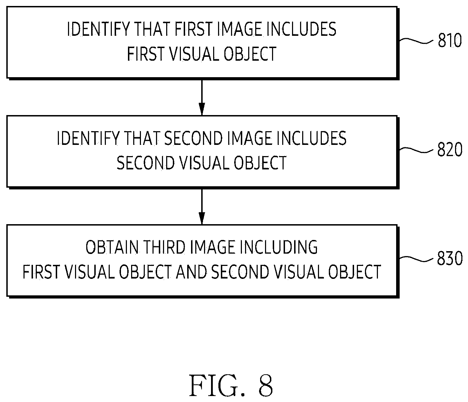

FIG. 8 is a flowchart illustrating an operation of an electronic device according to an embodiment. Operations of FIG. 8 may be performed by the processor 210 of the electronic device 200 illustrated in FIG. 2. Operations 810 to 830 may be related to operation 440 of FIG. 4.

In the following embodiment, each operation may be performed sequentially, but is not necessarily performed sequentially. For example, the sequence of each operation may be changed, and at least two operations may be performed in parallel.

Referring to FIG. 8, in operation 810, the processor 210 may identify that a first image includes a first visual object. For example, the processor 210 may identify that the first image includes the first visual object, corresponding to an external object (e.g., a star) and disposed in a first position within the first image.

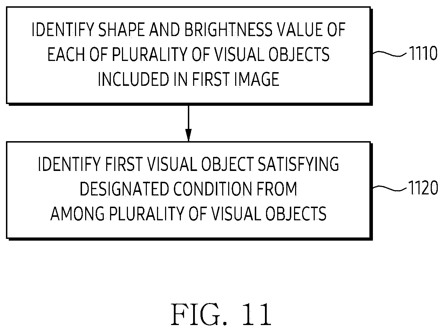

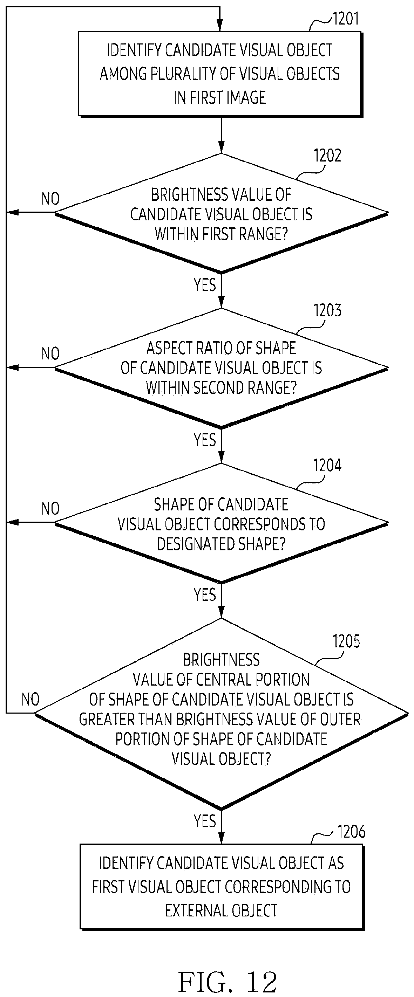

According to an embodiment, the processor 210 may identify a first visual object corresponding to an external object (e.g., a star) among a plurality of visual objects included in the first image. An example of a specific operation of identifying the first visual object among a plurality of visual objects included in the first image will be described later with reference to FIGS. 11 and 12.

In operation 820, the processor 210 may identify that a second image includes a second visual object. For example, the processor 210 may identify that the second image includes a second visual object, corresponding to an external object (e.g., a star) and disposed in a second position within the second image.

According to an embodiment, the processor 210 may identify that an external object (e.g., a star) moves over time. For example, the external object may be identified as being moved based on a rotation of the Earth. Although an absolute position of the external object is not changed, it may be identified as the external object being moved by the rotation of the Earth. Hereinafter, for convenience of description, it may be described that an external object is moved based on an observer (or an electronic device).

For example, while a camera (e.g., the camera 220 of FIG. 2) (or the electronic device 200 of FIG. 2) is fixed and photographs a fixed external area, an external object may move over time. Therefore, a position of the first visual object corresponding to the external object in the first image may be different from a position of the second visual object corresponding to the external object in the second image.

In operation 830, the processor 210 may obtain a third image including the first visual object and the second visual object. For example, the processor 210 may obtain the third image including the first visual object and the second visual object, based on synthesizing the first image and the second image.

According to an embodiment, the processor 210 may obtain a third image including both the first visual object and the second visual object. For example, the processor 210 may obtain a third image including only the first visual object and the second visual object.

According to an embodiment, the processor 210 may remove, from the third image, remaining visual objects excluding the first visual object among a plurality of visual objects included in the first image and remaining visual objects excluding the second visual object among a plurality of visual objects included in the second image. The processor 210 may obtain the third image by removing visual objects that do not correspond to the external object, in order to represent only the trajectory of the external object.

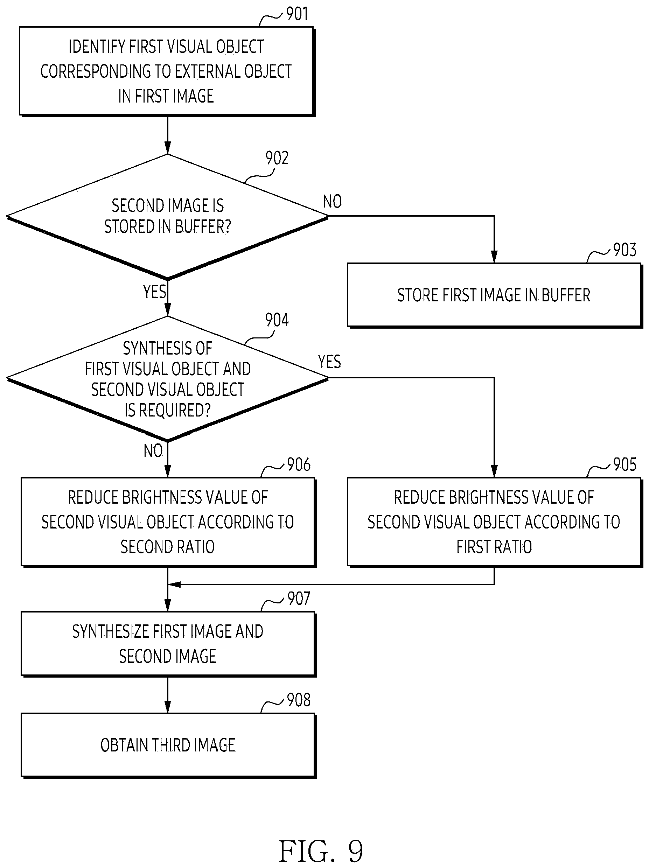

FIG. 9 is a flowchart illustrating an operation of an electronic device according to an embodiment. Operations of FIG. 9 may be performed by the processor 210 of the electronic device 200 illustrated in FIG. 2. Operations 901 to 908 may be related to an operation of synthesizing a first image and a second image to represent a trajectory of an external object.

In the following embodiment, each operation may be performed sequentially, but is not necessarily performed sequentially. For example, the sequence of each operation may be changed, and at least two operations may be performed in parallel.

Referring to FIG. 9, in operation 901, the processor 210 may identify a first visual object corresponding to an external object in a first image. For example, the processor 210 may identify a plurality of visual objects included in the first image. The processor 210 may identify the first visual object corresponding to an external object, based on a plurality of visual objects included in the first image. A detailed operation of the processor 210 for identifying a visual object corresponding to an external object in an image will be described later with reference to FIGS. 11 and 12.

In operation 902, the processor 210 may identify whether a second image is stored in a buffer. For example, by identifying whether the second image is stored in the buffer, the processor 210 may identify whether the first image is obtained to configure a first frame among a plurality of frames constituting video data. For example, the processor 210 may identify whether the first image is obtained after a video synthesis process is reset, by identifying whether the second image is stored in the buffer.

In operation 903, when the second image is not stored in the buffer (operation 902-NO), the processor 210 may store the first image in the buffer. For example, the processor 210 may store the first image in the buffer, based on identifying that the second image is not stored in the buffer of the memory 230. For example, the processor 210 may configure the first image as one frame of a plurality of frames constituting video data.

In operation 904, when the second image is stored in the buffer (operation 902-YES), the processor 210 may identify whether a synthesis of the first visual object and the second visual object is required. For example, the processor 210 may identify whether a synthesis of the first visual object and the second visual object is required based on identifying that the second image is stored in the buffer.

For example, based on identifying that a brightness value of the first image is greater than or equal to a designated brightness value, the processor 210 may identify that a trajectory of an external object is not represented according to the synthesis of the first visual object and the second visual object. Accordingly, the processor 210 may identify whether a synthesis of the first visual object and the second visual object is required, based on the brightness value of the first image.

For example, the processor 210 may separate the first image into a luminance channel and a chroma channel. The processor 210 may identify whether a synthesis of the first visual object and the second visual object is required, based on a value related to the luminance of the first image according to the luminance channel. For example, the luminance channel may indicate information on a brightness difference of the first image. For example, the chroma channel may indicate information on a color difference of the first image in the first image.

For example, the processor 210 may identify whether a trajectory of an external object is represented according to the synthesis of the first visual object and the second visual object. Even when it is identified that the first visual object corresponds to an external object (e.g., a star), the first visual object may not actually correspond to the external object. Therefore, the processor 210 may identify whether the synthesis of the first visual object and the second visual object is required by comparing a feature of the first visual object and a feature of the second visual object (e.g., size, shape, or position).

For example, the processor 210 may identify whether a synthesis of the first visual object and the second visual object is required, based on comparing a size of the first visual object and a size of the second visual object. For example, based on comparing a first position of the first visual object within the first image and a second position of the second visual object within the second image, the processor 210 may identify whether the synthesis of the first visual object and the second visual object is required.

In operation 905, when the synthesis of the first visual object and the second visual object is required (operation 904-YES), the processor 210 may reduce a brightness value of the second visual object according to a first ratio.

For example, the processor 210 may reduce a brightness value of the second visual object of the second image, which is obtained before the first image, to represent the trajectory of the external object. The processor 210 may reduce the brightness value of the second visual object according to the first ratio.

In operation 906, when the synthesis of the first visual object and the second visual object is not required (operation 904-NO), the processor 210 may reduce the brightness value of the second visual object according to a second ratio.

For example, the second ratio may be set to be greater than the first ratio. The processor 210 may reduce the brightness value of the second visual object of the second image, which is obtained before the first image, according to a ratio relatively greater than the brightness value of the first visual object. When the trajectory of the external object is not represented according to the synthesis of the first visual object and the second visual object, the processor 210 may exclude the second visual object and synthesize the first image and the second image. Accordingly, the processor 210 may reduce the brightness value of the second visual object according to the second ratio greater than the first ratio.

In operation 907, the processor 210 may synthesize the first image and the second image. For example, according to operation 905, the processor 210 may synthesize the first image and the second image after reducing the brightness value of the first visual object in the first image according to the first ratio. For example, according to operation 906, the processor 210 may synthesize the first image and the second image after reducing the brightness value of the second visual object in the second image according to the second ratio.

In operation 908, the processor 210 may obtain a third image. For example, the processor 210 may obtain the third image, based on synthesizing the first image and the second image. For example, the third image may include the first visual object and the second visual object. A brightness value of the second visual object included in the third image may be in a state that it is reduced by the first ratio or the second ratio compared to the brightness value of the second visual object included in the second image.

According to an embodiment, the processor 210 may separate the first image into a luminance channel and a chroma channel. The processor 210 may separate the second image into a luminance channel and a chroma channel. The processor 210 may identify a synthesis ratio based on a first value indicating the luminance of the first image and a second value indicating the luminance of the second image. The processor 210 may synthesize a luminance channel of the first image and a luminance channel of the second image, based on the identified synthesis ratio. The processor 210 may synthesize a chroma channel of the first image and a chroma channel of the second image, based on the identified synthesis ratio. According to an embodiment, the synthesis ratio for synthesizing the chroma channel of the first image and the chroma channel of the second image may be set differently from the synthesis ratio for synthesizing the luminance channel of the first image and the luminance channel of the second image.

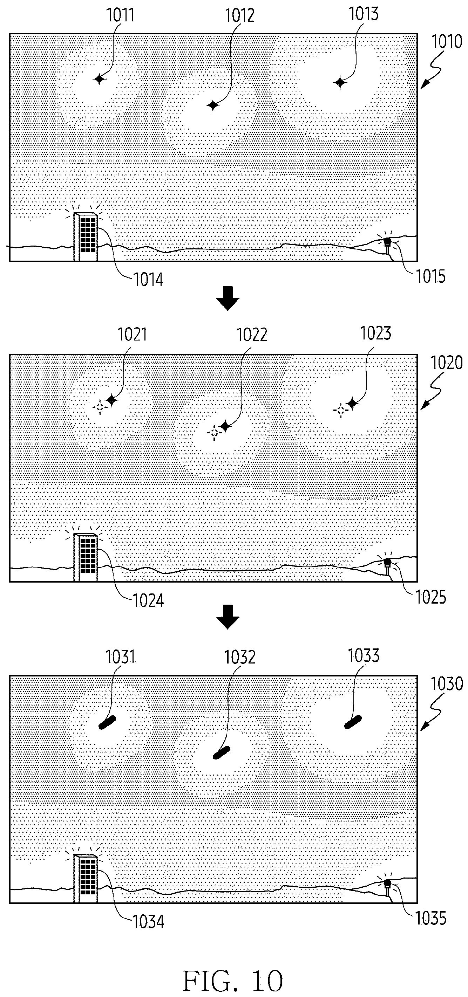

FIG. 10 illustrates an example of an operation of an electronic device according to an embodiment. Operations of FIG. 10 may be performed by the processor 210 of the electronic device 200 illustrated in FIG. 2.

Referring to FIG. 10, the processor 210 may obtain an image 1010. The image 1010 may include visual objects 1011 to 1015. For example, the processor 210 may identify that visual objects 1011 to 1015 all correspond to stars. Even when only visual objects 1011 to 1013 actually corresponds to a star, the processor 210 may identify that visual objects 1011 to 1015 all correspond to a star. As an example, the visual object 1014 may actually correspond to light of a building. The visual object 1015 may actually correspond to light of a street tree.

According to an embodiment, the processor 210 may obtain an image 1020. For example, the processor 210 may obtain the image 1020 after obtaining the image 1010. As time elapses, a position of a visual object corresponding to the star in the image 1020 may change.

For example, the processor 210 may identify that the position of the visual objects 1021 to 1023 in the image 1020 are changed based on the position of the visual objects 1011 to 1013 in the image 1010. The processor 210 may identify that the visual object 1011 and the visual object 1021 correspond to the same star. The processor 210 may synthesize the visual object 1011 and the visual object 1021. The processor 210 may identify that the visual object 1012 and the visual object 1022 correspond to the same star. The processor 210 may synthesize the visual object 1012 and the visual object 1022. The processor 210 may identify that the visual object 1013 and the visual object 1023 correspond to the same star. The processor 210 may synthesize the visual object 1013 and the visual object 1023.

For example, the processor 210 may identify that the position of the visual object 1024 in the image 1020 is identical to the position of the visual object 1014 in the image 1010. The processor 210 may identify that the position of the visual object 1025 in the image 1020 is identical to the position of the visual object 1015 in the image 1010. The processor 210 may identify that the visual object 1024 and the visual object 1025 do not correspond to the star. The processor 210 may not synthesize the visual object 1014 and the visual object 1024. The processor 210 may not synthesize the visual object 1015 and the visual object 1025.

According to an embodiment, the processor 210 may synthesize the image 1010 and the image 1020. The processor 210 may obtain an image 1030 by synthesizing the image 1010 and the image 1020. The image 1030 may include visual objects 1031 to 1035.

For example, the processor 210 may obtain a visual object 1031, based on synthesizing the visual object 1011 and the visual object 1021. The processor 210 may obtain a visual object 1032 based on synthesizing the visual object 1012 and the visual object 1022. The processor 210 may obtain a visual object 1033 based on synthesizing the visual object 1013 and the visual object 1023.

For example, the processor 210 may not synthesize the visual object 1014 and the visual object 1024. The processor 210 may configure a visual object 1034 to correspond to the visual object 1024. The processor 210 may not synthesize the visual object 1015 and the visual object 1025. The processor 210 may configure a visual object 1035 to correspond to the visual object 1025.

Unlike the illustration, an image 1030 in which the image 1010 and the image 1020 are synthesized may not include the visual object 1034 and the visual object 1035. The processor 210 may configure the image 1030 to include only the trajectory of the star. For example, the image 1030 may include only the visual objects 1031 to 1033. As an example, the processor 210 may perform a synthesis of the image 1010 and the image 1020 in a state of excluding the visual object 1014, the visual object 1015, the visual object 1024, and the visual object 1025.

FIG. 11 is a flowchart illustrating an operation of an electronic device according to an embodiment. Operations of FIG. 11 may be performed by the processor 210 of the electronic device 200 illustrated in FIG. 2. Operations 1110 and 1120 may be related to an operation of identifying a first visual object corresponding to an external object among a plurality of visual objects included in a first image.

In the following embodiment, each operation may be performed sequentially, but is not necessarily performed sequentially. For example, the sequence of each operation may be changed, and at least two operations may be performed in parallel.

Referring to FIG. 11, in operation 1110, the processor 210 may identify a shape and a brightness value of each of a plurality of visual objects included in the first image. For example, the processor 210 may identify a plurality of visual objects of the first image. The processor 210 may identify a shape and a brightness value of each of the plurality of visual objects.

In operation 1120, the processor 210 may identify a first visual object satisfying a designated condition from among the plurality of visual objects. For example, the processor 210 may identify the first visual object satisfying the designated condition from among the plurality of visual objects, based on a shape and a brightness value of each of the plurality of visual objects.

According to an embodiment, the processor 210 may identify a candidate visual object that is one of the plurality of visual objects. Based on identifying that the candidate visual object satisfies the designated condition, the processor 210 may identify the candidate visual object as the first visual object corresponding to an external object.

For example, the processor 210 may identify a brightness value of the candidate visual object. The processor 210 may identify a brightness value of the candidate visual object, based on a brightness value of at least one pixel constituting the candidate visual object. The processor 210 may identify whether the brightness value of the candidate visual object is within a first range. Based on identifying that the brightness value of the candidate visual object is within the first range, the processor 210 may identify the candidate visual object as a first visual object corresponding to an external object (e.g., a star).

For example, the processor 210 may identify a shape of the candidate visual object. The processor 210 may identify an aspect ratio in the shape of the candidate visual object. The processor 210 may identify whether the aspect ratio in the shape of the candidate visual object is within a second range. Based on identifying that the aspect ratio in the shape of the candidate visual object is within the second range, the processor 210 may identify the candidate visual object as a first visual object corresponding to an external object (e.g., a star).

FIG. 12 is a flowchart illustrating an operation of an electronic device, according to an embodiment. Operations of FIG. 12 may be performed by the processor 210 of the electronic device 200 illustrated in FIG. 2. Operations 1201 and 1206 may be related to an operation of identifying a first visual object corresponding to an external object among a plurality of visual objects included in a first image.

Referring to FIG. 12, in operation 1201, the processor 210 may identify a candidate visual object among a plurality of visual objects in the first image. For example, the processor 210 may set one of the plurality of visual objects in the first image as a candidate visual object. For example, the processor 210 may sequentially set a plurality of visual objects as candidate visual objects.

In operation 1202, the processor 210 may identify whether a brightness value of the candidate visual object is within a first range. For example, the processor 210 may identify a brightness value of at least one pixel constituting the candidate visual object. The processor 210 may identify a brightness value of the candidate visual object based on the brightness value of the at least one pixel. As an example, the processor 210 may identify a representative value (e.g., a maximum value, a minimum value, an intermediate value, a mode value, or an average value) of brightness values of at least one pixel as a brightness value of a candidate visual object. As an example, the processor 210 may identify an intermediate value of brightness values of at least one pixel as a brightness value of the candidate visual object.

For example, a brightness value of a visual object corresponding to an external object (e.g., a star) may be within the first range. As an example, the processor 210 may identify that the candidate visual object corresponds to the external object, based on identifying that the brightness value of the candidate visual object is within the first range.

According to an embodiment, when the brightness value of the candidate visual object is out of the first range (operation 1202-NO), the processor 210 may perform operation 1201. The processor 210 may identify another candidate visual object among the plurality of visual objects in the first image, based on identifying that the brightness value of the candidate visual object is out of the first range. The processor 210 may perform operations 1202 to 1206, based on identifying other candidate visual objects.

In operation 1203, when the brightness value of the candidate visual object is within the first range (operation 1202-YES), the processor 210 may identify whether an aspect ratio of a shape of the candidate visual object is within a second range. For example, the processor 210 may identify whether the aspect ratio of the shape of the candidate visual object is within the second range, based on identifying that the brightness value of the candidate visual object is within the first range. For example, the second range may be set to 0.8 to 1.2.

For example, an aspect ratio of a shape of a visual object corresponding to an external object (e.g., a star) may be within a second range. As an example, the processor 210 may identify that the candidate visual object corresponds to the external object, based on identifying that the aspect ratio of the shape of the visual object is within the second range.

According to an embodiment, when the aspect ratio of the shape of the candidate visual object is out of the second range (operation 1203-NO), the processor 210 may perform operation 1201. The processor 210 may identify another candidate visual object among the plurality of visual objects in the first image, based on identifying that the aspect ratio of the shape of the candidate visual object is out of the second range. The processor 210 may perform operations 1202 to 1206, based on identifying other candidate visual objects.

In operation 1204, when the aspect ratio of the shape of the candidate visual object is within the second range (operation 1203-YES), the processor 210 may identify whether the shape of the candidate visual object corresponds to a designated shape. For example, the processor 210 may identify whether the shape of the candidate visual object corresponds to the designated shape, based on identifying that the aspect ratio of the shape of the candidate visual object is within the second range. The designated shape may be set to one of a circle, a square, an ellipse, a rectangle, and a short straight line. According to an embodiment, the designated shape may be set based on an exposure time. For example, when the exposure time is set to a first time interval (e.g., 5 seconds), the designated shape may be set to a circle or a rectangle. For example, when the exposure time is set to a second time interval (e.g., 10 to 15 seconds), the designated shape may be set to one of an ellipse, a rectangle, or a short straight line.

For example, a shape of a visual object corresponding to an external object (e.g., a star) may correspond to the designated shape. As an example, the processor 210 may identify that the candidate visual object corresponds to the external object, based on the shape of the candidate visual object corresponding to the designated shape.

According to an embodiment, when the shape of the candidate visual object does not correspond to the designated shape (operation 1204-NO), the processor 210 may perform operation 1201. Based on identifying that the shape of the candidate visual object does not correspond to the designated shape, the processor 210 may identify another candidate visual object among the plurality of visual objects in the first image. The processor 210 may perform operations 1202 to 1206 based on identifying other candidate visual objects.

In operation 1205, when the shape of the candidate visual object corresponds to the designated shape (operation 1204-YES), the processor 210 may identify whether a brightness value of a central portion of the shape of the candidate visual object is greater than a brightness value of an outer portion of the shape of the candidate visual object. For example, based on identifying that the shape of the candidate visual object corresponds to the designated shape, the processor 210 may identify whether the brightness value of the central portion of the shape of the candidate visual object is greater than the brightness value of the outer portion of the shape of the candidate visual object.

For example, a brightness value of a central portion of a shape of a visual object corresponding to an external object (e.g., a star) may be greater than a brightness value of an outer portion. For example, the processor 210 may identify that the candidate visual object corresponds to the external object, based on identifying that the brightness value of the central portion of the shape of the candidate visual object is greater than the brightness value of the outer portion.

According to an embodiment, when the brightness value of the central portion of the shape of the candidate visual object is less than or equal to the brightness value of the outer portion of the shape of the candidate visual object (operation 1205-NO), the processor 210 may perform operation 1201. Based on identifying that the brightness value of the central portion of the shape of the candidate visual object is less than or equal to the brightness value of the outer portion of the shape of the candidate visual object, the processor 210 may identify another candidate visual object among the plurality of visual objects in the first image. The processor 210 may perform operations 1202 to 1206, based on identifying other candidate visual objects.

In operation 1206, when the brightness value of the central portion of the shape of the candidate visual object is greater than the brightness value of the outer portion of the shape of the candidate visual object (operation 1205-YES), the processor 210 may identify the candidate visual object as a first visual object corresponding to the external object. For example, the processor 210 may identify the candidate visual object as the first visual object corresponding to the external object, based on identifying that the brightness value of the central portion of the shape of the candidate visual object is greater than the brightness value of the outer portion of the shape of the candidate visual object.

Operations 1202 to 1205 are illustrated to be performed sequentially, but are not limited thereto. A sequence of operations 1202 to 1205 may be changed, and operations 1202 to 1205 may be performed in parallel (or simultaneously).

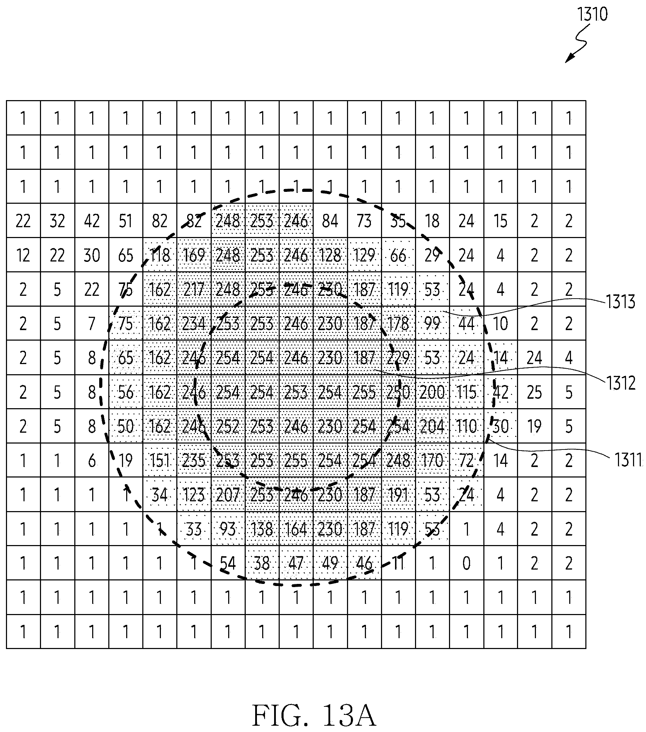

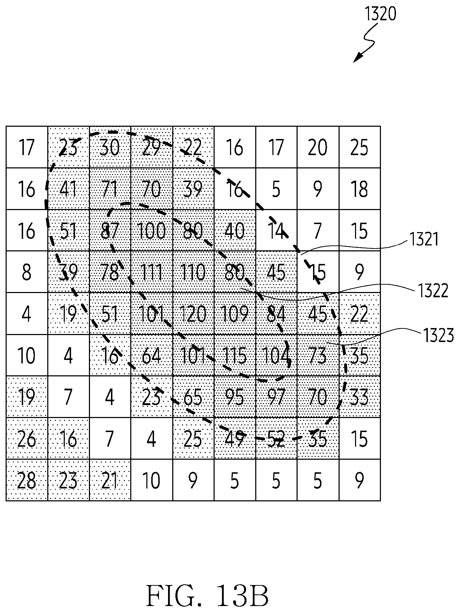

FIGS. 13A and 13B illustrate an example of an operation of an electronic device according to an embodiment. Operations of FIGS. 13A and 13B may be performed by the processor 210 of the electronic device 200 illustrated in FIG. 2.

Referring to FIG. 13A, the processor 210 may identify an image 1310. The processor 210 may identify an image 1310 that is a portion of the obtained first image. The processor 210 may identify an image 1310, which includes a candidate visual object included in the first image and is a portion of the first image. For example, the processor 210 may identify the image 1310 of a designated size (e.g., 17x16 pixels). According to an embodiment, the processor 210 may change the specified size based on a zoom magnification and a resolution size. For example, the processor 210 may identify an image of a designated size (e.g., 30x30 pixels), based on 1x zoom and ultra high definition (UHD) resolution.

According to an embodiment, the image 1310 may include a plurality of pixels. The processor 210 may identify brightness values of the plurality of pixels. The processor 210 may identify the brightness value of the plurality of pixels as one of 0 to 255. As the pixel becomes brighter, the processor 210 may set a larger brightness value of the pixel. Each of grids of the image 1310 may mean a pixel. A number in the grids may mean a brightness value of a pixel.

According to an embodiment, the image 1310 may include a candidate visual object 1311. The candidate visual object 1311 may be configured with at least one pixel in the image 1310. The processor 210 may identify the candidate visual object 1311 based on the brightness value of the plurality of pixels.

A brightness value of a visual object (or a central portion or an outer portion) described below may mean a representative value of brightness values of at least one pixel constituting the visual object (or the central portion or the outer portion). For example, a representative value of the brightness values of the at least one pixel constituting the visual object (or the central portion or the outer portion) may be one of a maximum value, a minimum value, an intermediate value, a mode value, or an average value of the brightness values of the at least one pixel constituting the visual object (or the central portion or the outer portion). According to an embodiment, the processor 210 may identify information on a feature of the candidate visual object 1311. For example, the processor 210 may identify a brightness value of the candidate visual object 1311. For example, the processor 210 may identify an aspect ratio of a shape of the candidate visual object 1311. For example, the processor 210 may identify whether the shape of the candidate visual object 1311 corresponds to a designated shape. For example, the processor 210 may identify whether a brightness value of a central portion 1312 in the shape of the candidate visual object 1311 is greater than a brightness value of an outer portion 1313. For example, the brightness value of the central portion 1312 may mean a representative value (e.g., a maximum value, a minimum value, an intermediate value, a mode value, or an average value) of brightness values of pixels corresponding to the central portion 1312. For example, a brightness value of the outer portion 1313 may mean a representative value (e.g., a maximum value, a minimum value, an intermediate value, a mode value, or an average value) of brightness values of pixels corresponding to the outer portion 1313. For example, the processor 210 may identify that the candidate visual object 1311 satisfies a first condition, based on identifying that the brightness value of the candidate visual object 1311 is within a first range. For example, the processor 210 may identify that the candidate visual object 1311 satisfies a second condition, based on identifying that the aspect ratio of the shape of the candidate visual object 1311 is within a second range. For example, the processor 210 may identify that the candidate visual object 1311 satisfies a third condition, based on identifying that a shape of the candidate visual object 1311 corresponds to a designated shape. For example, based on identifying that a brightness value of the central portion 1312 of the shape of the candidate visual object 1311 is greater than a brightness value of the outer portion 1313, the processor 210 may identify that the candidate visual object 1311 satisfies a fourth condition.

Based on identifying that the candidate visual object 1311 satisfies all of the first to fourth conditions, the processor 210 may identify the candidate visual object 1311 as a first visual object corresponding to an external object (e.g., a star). According to an embodiment, the processor 210 may also identify the candidate visual object 1311 as a first visual object corresponding to an external object (e.g., a star), based on identifying that the candidate visual object 1311 satisfies at least a portion of the first to fourth conditions.

Referring to FIG. 13B, the processor 210 may identify an image 1320. The processor 210 may identify the image 1320 that is a portion of the obtained first image. The processor 210 may identify the image 1320, which includes a candidate visual object included in the first image and is a portion of the first image.

According to an embodiment, the processor 210 may identify information on a feature of a candidate visual object 1321. For example, the processor 210 may identify a brightness value of the candidate visual object 1321. For example, the processor 210 may identify an aspect ratio of a shape of the candidate visual object 1321. For example, the processor 210 may identify whether the shape of the candidate visual object 1321 corresponds to a designated shape. For example, the processor 210 may identify whether a brightness value of a central portion 1322 in the shape of the candidate visual object 1321 is greater than a brightness value of an outer portion 1323.

For example, the processor 210 may identify whether the candidate visual object 1321 satisfies a first condition, based on identifying whether a brightness value of the candidate visual object 1321 is within a first range. For example, the processor 210 may identify whether the candidate visual object 1321 satisfies a second condition, based on identifying whether the aspect ratio of the shape of the candidate visual object 1321 is within a second range. For example, the processor 210 may identify whether the candidate visual object 1321 satisfies a third condition, based on identifying whether the shape of the candidate visual object 1321 corresponds to a designated shape. For example, based on identifying whether a brightness value of the central portion 1322 of the shape of the candidate visual object 1321 is greater than the brightness value of the outer portion 1323, the processor 210 may identify whether the candidate visual object 1321 satisfies the fourth condition.

According to an embodiment, the processor 210 may identify that the candidate visual object 1321 does not correspond to the external object, based on identifying that the candidate visual object 1321 does not satisfy at least one of the first to fourth conditions. According to an embodiment, the processor 210 may identify that the candidate visual object 1321 does not correspond to an external object (e.g., a star), based on identifying that the candidate visual object 1321 does not satisfy at least a portion of the first to fourth conditions.

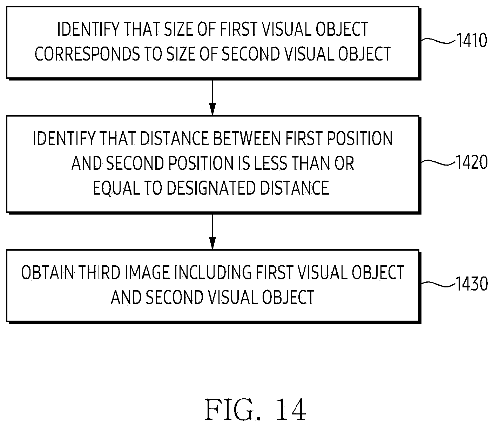

FIG. 14 is a flowchart illustrating an operation of an electronic device according to an embodiment. Operations of FIG. 14 may be performed by the processor 210 of the electronic device 200 illustrated in FIG. 2.

In the following embodiment, each operation may be performed sequentially, but is not necessarily performed sequentially. For example, the sequence of each operation may be changed, and at least two operations may be performed in parallel.

Referring to FIG. 14, in operation 1410, the processor 210 may identify that a size of a first visual object corresponds to a size of a second visual object. For example, the first visual object may be included in a first image obtained. The second visual object may be included in a pre-synthesized second image. For example, the first visual object may indicate a current external object. The second visual object may indicate a trajectory of the external object over time.

According to an embodiment, the first visual object may be configured in a circular shape. The second visual object may be configured in an ellipse. The processor 210 may identify a diameter of the first visual object configured in a circular shape as a size of the first visual object. The processor 210 may identify a minor axis among a major axis and the minor axis of a second visual object configured in an ellipse as a size of the second visual object. Based on identifying that a length of the diameter of the first visual object corresponds to a length of the minor axis of the second visual object, the processor 210 may identify that the size of the first visual object corresponds to the size of the second visual object.

According to an embodiment, the first visual object may correspond to an external object and may be disposed at a first position in the first image. The second visual object may correspond to an external object and may be disposed at a second position in the second image.

According to an embodiment, the processor 210 may identify that the first visual object corresponds to the external object, based on identifying that a size of the first visual object corresponds to a size of the second visual object.

In operation 1420, the processor 210 may identify that a distance between the first position and the second position is less than or equal to a designated distance. For example, the processor 210 may identify that the distance between the first position and the second position is less than or equal to the designated distance, based on identifying that the size of the first visual object corresponds to the size of the second visual object.

For example, a position of an external object (e.g., a star) may be changed over time. The processor 210 may identify movement of the external object by identifying a distance between the first position and the second position. The processor 210 may identify the designated distance, which is a distance at which a visual object indicating an external object is movable within the image for a designated time. Based on identifying that the distance between the first position and the second position is less than or equal to the designated distance, the processor 210 may identify that the first visual object and the second visual object correspond to the external object.

In operation 1430, the processor 210 may obtain a third image including the first visual object and the second visual object. For example, the processor 210 may obtain the third image including the first visual object and the second visual object, based on identifying that the distance between the first position and the second position is less than or equal to the designated distance.

According to an embodiment, the processor 210 may synthesize the first image and the second image, based on an alpha blending algorithm. For example, a brightness value of a first visual object included in the third image may be set to be greater than a brightness value of a second visual object included in the third image. For example, the processor 210 may obtain the third image, based on the alpha blending algorithm, by changing a brightness value of the first visual object included in the first image according to a first ratio (e.g., a), changing a brightness value of the second visual object included in the second image according to a second ratio (e.g., 1-a), and synthesizing the first visual object and the second visual object changed according to the first ratio and the second ratio.

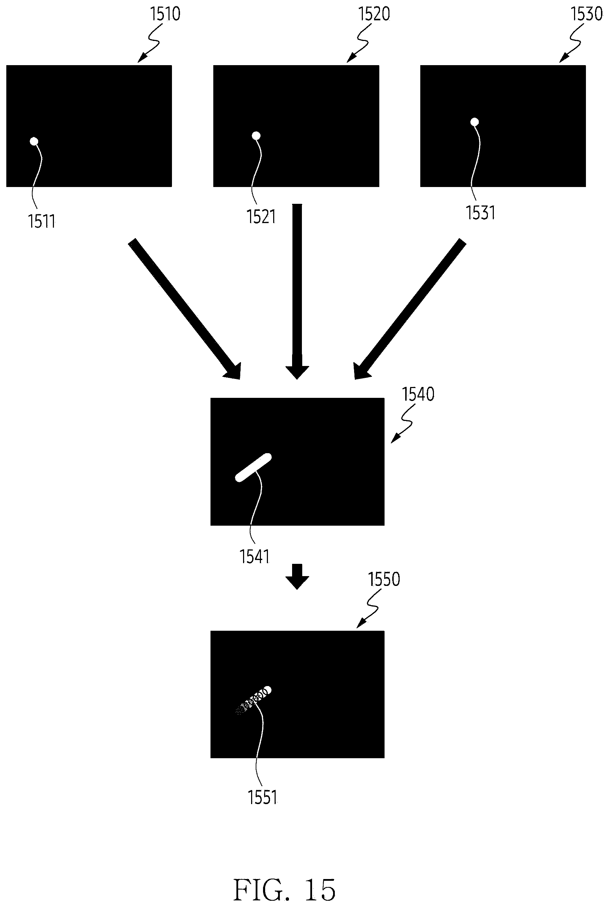

FIG. 15 illustrates an example of an operation of an electronic device according to an embodiment. Operations for obtaining images in FIG. 15 may be performed by the processor 210 of the electronic device 200 illustrated in FIG. 2.

Referring to FIG. 15, the processor 210 may obtain images 1510 to 1530. For example, the processor 210 may sequentially obtain images 1510 to 1530.

According to an embodiment, the processor 210 may obtain an image 1510. The image 1510 may include a visual object 1511 corresponding to an external object (e.g., a star). The processor 210 may obtain an image 1520 after obtaining the image 1510. The image 1520 may include a visual object 1521 corresponding to an external object. The processor 210 may obtain an image 1530 after obtaining the image 1520. The image 1530 may include a visual object 1531 corresponding to an external object.

According to an embodiment, the processor 210 may synthesize the images 1510 to 1530. The processor 210 may obtain an image 1540 based on synthesizing the images 1510 to 1530. For example, the processor 210 may synthesize only visual objects 1511 to 1531 corresponding to the external object from among objects included in the images 1510 to 1530. The processor 210 may obtain the visual object 1541 based on synthesizing the visual objects 1511 to 1531. The processor 210 may obtain an image 1540 including a visual object 1541. For example, the visual object 1541 may indicate a trajectory of an external object.

According to an embodiment, the processor 210 may obtain an image 1550 indicating that the external object moves over time. For example, the processor 210 may synthesize the images 1510 to 1530, based on the alpha blending algorithm. For example, the processor 210 may change a brightness value of the visual object 1511 according to a first ratio. The processor 210 may change a brightness value of the visual object 1521 according to a second ratio. The processor 210 may change a brightness value of the visual object 1531 according to a third ratio. The third ratio may be set to be greater than the second ratio. The second ratio may be set to be greater than the first ratio. As an example, a sum of the first to third ratios may be set to 1.

The processor 210 may change the brightness value of the visual objects 1511 to 1531 according to the above-described ratios and synthesize the visual objects 1511 to 1531. The processor 210 may obtain a visual object 1551 based on synthesizing the visual objects 1511 to 1531. The visual object 1551 may indicate a trajectory of an external object. For example, the visual object 1551 may set a brightness value of a portion indicating the previous trajectory to be low. The processor 210 may synthesize (or blend) a plurality of images so that previous trajectories in the video data become gradually darker over time.

According to an embodiment, the processor 210 may configure the image 1550 as one of a plurality of frames constituting video data. The processor 210 may identify video data by configuring a plurality of frames according to the above-described operation. For example, the processor 210 may identify that movement of a visual object included in an image constituting one frame does not occur. The processor 210 may change a weight (e.g., blending weight) for synthesis so that the trajectory of the external object may quickly disappear as the video data is played.

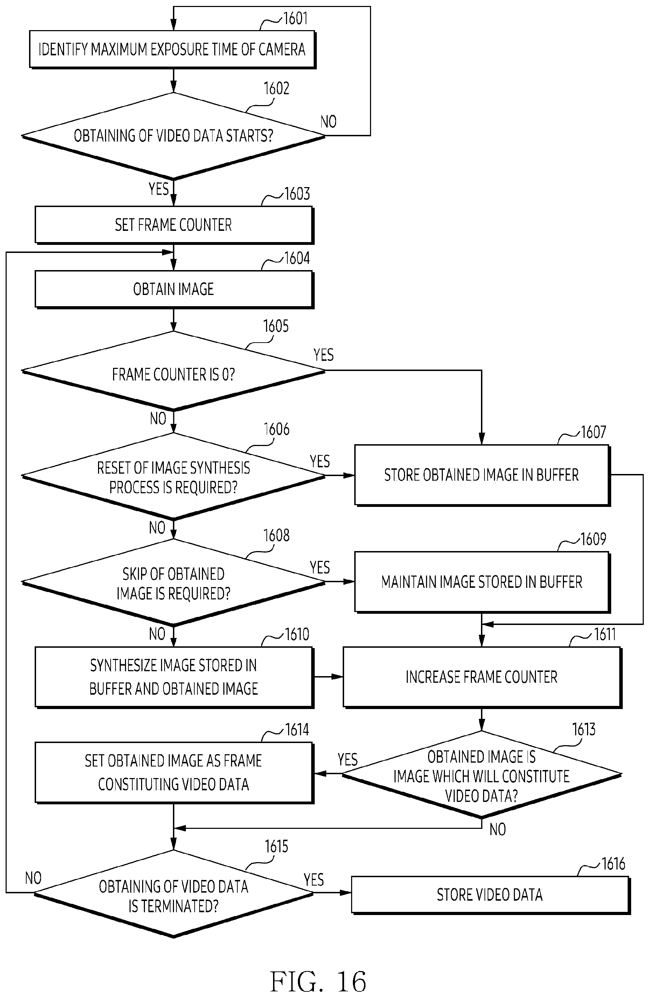

FIG. 16 is a flowchart illustrating an operation of an electronic device according to an embodiment. Operations of FIG. 16 may be performed by the processor 210 of the electronic device 200 illustrated in FIG. 2.

Referring to FIG. 16, operations 1601 to 1605 may correspond to operations 501 to 505 of FIG. 5, respectively.

In operation 1606, the processor 210 may identify whether a reset of an image synthesis process is required. Operation 1606 may correspond to operation 506 of FIG. 5.

According to an embodiment, the processor 210 may identify whether two or more images immediately before an image is obtained have been consecutively skipped. The processor 210 may identify whether a reset of the image synthesis process is required, based on identifying whether two or more images immediately before an image is obtained have been consecutively skipped.

In operation 1607, when a frame counter is 0, or a reset of image synthesis process is required, the processor 210 may store the obtained image in a buffer. Operation 1607 may correspond to operation 507.

In operation 1608, when a reset of the image synthesis process is not required, the processor 210 may identify whether a skip of the obtained image is required. For example, the processor 210 may identify whether a skip of the obtained image is required, based on identifying that a reset of the image synthesis process is not required.

For example, the processor 210 may identify whether a skip of the obtained image is required, based on identifying whether a brightness value of the obtained image is greater than or equal to a designated brightness value. For example, the processor 210 may identify whether a skip of the obtained image is required, based on identifying whether movement of the electronic device 200 has occurred while obtaining the image. For example, the processor 210 may identify whether a skip of the obtained image is required, based on identifying whether the electronic device 200 moves and then returns to an original position, while the image is being obtained.

In operation 1609, when a skip of the obtained image is required, the processor 210 may maintain an image stored in the buffer. For example, the processor 210 may not synthesize the obtained image with the image stored in the buffer.

According to an embodiment, based on identifying that a skip of the obtained image is required, the processor 210 may synthesize the obtained image with the image stored in the buffer. However, the processor 210 may not store the synthesized image in the buffer.

For example, the processor 210 may identify that a skip of the obtained image is required, based on identifying whether a brightness value of the obtained image is greater than or equal to a designated brightness value. The processor 210 may maintain the image stored in the buffer, based on identifying that a skip of the obtained image is required. Based on identifying that a skip of the obtained image is required, the processor 210 may synthesize the obtained image with the image stored in the buffer. However, the processor 210 may not store the synthesized image in the buffer.

For example, the processor 210 may identify that the electronic device 200 moves and then returns to the original position while the image is being obtained. The Processor 210 may identify that a skip of the obtained image is required. The processor 210 may maintain the image stored in the buffer, based on identifying that a skip of the obtained image is required. The processor 210 may synthesize the obtained image with the image stored in the buffer, based on identifying that a skip of the obtained image is required. However, the processor 210 may not store the synthesized image in the buffer.

In operation 1610, when a skip of the obtained image is not required, the processor 210 may synthesize the image stored in the buffer and the obtained image. The processor 210 may synthesize the image stored in the buffer and the obtained image, based on identifying that a skip of the obtained image is not required. Operation 1610 may correspond to operation 508 of FIG. 5.

Operations 1611 to 1616 may correspond to operations 509 to 513 of FIG. 5.

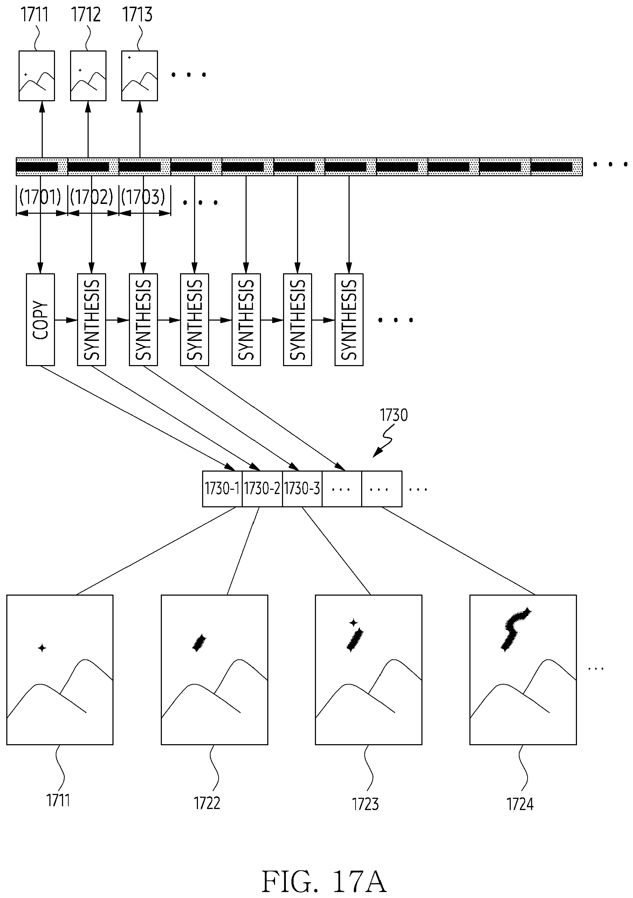

FIG. 17A illustrates an example of an operation of an electronic device according to an embodiment.

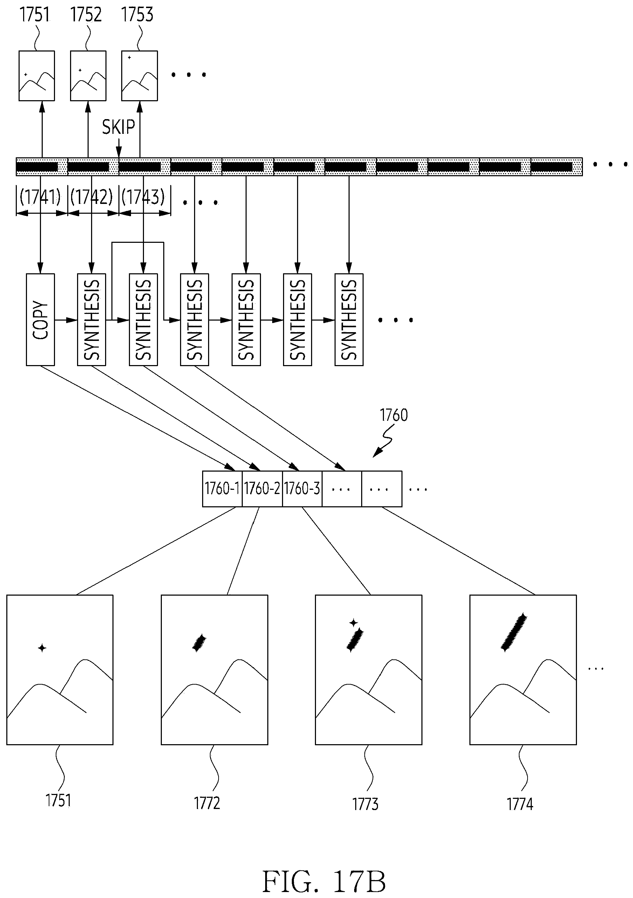

FIG. 17B illustrates an example of an operation of an electronic device according to an embodiment.

FIG. 17A illustrates an example in which a plurality of frames 1730 are obtained in a state in which an image 1713 is not skipped, when movement of the electronic device 200 occurs. FIG. 17B illustrates an example in which a plurality of frames 1760 are obtained in a state in which an image 1753 is skipped, when movement of the electronic device 200 occurs. Operations according to FIGS. 17A and 17B may be performed by the processor 210 of the electronic device 200 illustrated in FIG. 2.

Referring to FIG. 17A, the processor 210 may obtain an image 1711 within a time interval 1701. The processor 210 may set the image 1711 as a frame 1730-1 which is a first frame among the plurality of frames 1730. The processor 210 may store the image 1711 in a buffer of memory (e.g., the memory 230 of FIG. 2).

The processor 210 may obtain an image 1712 within a time interval 1702. The processor 210 may obtain an image 1722 by synthesizing the image 1711 stored in the buffer and the image 1712. The processor 210 may set the image 1722 as a frame 1730-2 which is a second frame among the plurality of frames 1730. The processor 210 may store the image 1722 in the buffer of the memory 230.

The processor 210 may obtain an image 1713 within a time interval 1703. For example, while the image 1713 is obtained, movement of the electronic device 200 may occur. As an example, while the processor 210 obtains the image 1713, the electronic device 200 may move and then return to an original position. A position of a visual object corresponding to an external object (e.g., a star) included in the image 1713 may be different from a position when the electronic device 200 does not move.

The processor 210 may obtain an image 1723 by synthesizing the image 1722 stored in the buffer and the image 1713. The processor 210 may set the image 1723 as a frame 1730-3 which is a third frame among the plurality of frames 1730. The processor 210 may store the image 1723 in the buffer of the memory 230.

The processor 210 may identify (or obtain) the plurality of frames 1730 consisting of a plurality of images including the image 1711, the image 1722, the image 1723, and an image 1724 by repeating the above-described operation. The processor 210 may obtain video data consisting of the plurality of frames 1730, and store the obtained video data in the memory 230.

According to an embodiment, the processor 210 may accumulate and synthesize a plurality of images, and set the synthesized image as one of a plurality of frames constituting video data. The processor 210 may represent a trajectory of an external object through video data, by setting the synthesized image as one of the plurality of frames constituting video data.

For example, as movement of the electronic device 200 occurs while obtaining the image 1713, the trajectory of the external object may be represented differently from an actual trajectory. As an example, after the image 1713 is obtained, one of a plurality of frames may be obtained like the image 1724. In order to correct the trajectory of the external object, the trajectory of the external object may be corrected using the operation described in FIG. 17B.

Referring to FIG. 17B, the processor 210 may obtain an image 1751 within a time interval 1741. The processor 210 may set the image 1751 as a frame 1760-1 which is a first frame among the plurality of frames 1760. The processor 210 may store the image 1751 in a buffer of the memory 230.

The processor 210 may obtain an image 1752 within a time interval 1742. The processor 210 may obtain the image 1772 by synthesizing the image 1751 stored in the buffer and the image 1752. The processor 210 may set the image 1772 as a frame 1760-2 which is a second frame among the plurality of frames 1760. The processor 210 may store the image 1772 in the buffer of the memory 230.

The processor 210 may obtain an image 1753 within a time interval 1743. For example, while the image 1753 is obtained, movement of the electronic device 200 may occur. For example, while the processor 210 obtains the image 1753, the electronic device 200 may move and then return to the original position. A position of a visual object corresponding to an external object (e.g., a star) included in the image 1753 may be different from a position when the electronic device 200 does not move.

The processor 210 may obtain an image 1773 by synthesizing the image 1772 stored in the buffer and the image 1753. The processor 210 may set the image 1773 as a frame 1760-3 which is a third frame among the plurality of frames 1760. Unlike FIG. 17A, the processor 210 may not store the image 1773 in the buffer of the memory 230. The processor 210 may not store the image 1773 in the buffer of the memory 230, based on identifying that the electronic device 200 moves and then returns to the original position, while the image 1753 is obtained.

The processor 210 may identify (or obtain) the plurality of frames 1760 consisting of a plurality of images including the image 1751, the image 1772, the image 1773, and an image 1774, by repeating the above-described operation. The processor 210 may obtain video data consisting of the plurality of frames 1760, and store the obtained video data in the memory 230.

According to an embodiment, the processor 210 may accumulate and synthesize a plurality of images, and set the synthesized image as one of a plurality of frames constituting video data. The processor 210 may represent a trajectory of an external object through video data by setting the synthesized image as one of a plurality of frames constituting video data.

For example, as movement of the electronic device 200 occurs while obtaining the image 1753, a trajectory of the external object may be represented differently from an actual trajectory only in the frame 1760-3. The processor 210 may obtain the image 1774 by excluding the image 1773 constituting the frame 1760-3 from the image synthesis process. The processor 210 may display the trajectory of the external object identically to the actual trajectory in remaining frames excluding the frame 1760-3. Since the trajectory of the external object is represented differently from the actual trajectory only in the frame 1760-3, which is one of the plurality of frames 1760, it may be difficult for the user to recognize it.

According to an embodiment, the processor 210 may exclude the frame 1760-3 from among the plurality of frames 1760. By excluding the frame 1760-3 from among the plurality of frames 1760, the processor 210 may display the trajectory of the external object identically to the actual trajectory, in the plurality of frames 1760.

According to an embodiment, an electronic device (e.g., the electronic device 200) may include a camera (e.g., the camera 220), memory (e.g., the memory 230), and a processor (e.g., the processor 210) operably coupled with the camera and the memory. The processor may be configured to identify, based on capability information of the image sensor, maximum exposure time of the camera as a first time interval. The processor may be configured to obtain, based on exposure time set as the first time interval, a first image using the camera. The processor may be configured to identify a second image constituting a first frame stored in the memory. The processor may be configured to obtain, based on synthesizing the first image and the second image, a third image. The processor may be configured to, based on configuring the third image as a second frame which is next frame after the first frame, obtain video data consisting of a plurality of fames including the first frame and the second frame.

According to an embodiment, the processor may be configured to obtain the first image by processing data obtained using the camera during a second time interval distinct from the first time interval based on the exposure time set as the first time interval.

According to an embodiment, the processor may be configured to obtain, based on configuring one frame per a third time interval including the first time interval and the second time interval, the video data consisting of a plurality of fames. The video data may be set to be played at 30 frames per second.

According to an embodiment, the processor may be configured to, after the third image constitutes the second frame, obtain, based on the exposure time set as the first time interval, a fourth image using the camera. The processor may be configured to, based on identifying that a brightness value related to the fourth image is greater than or equal to a designated brightness value, configure the fourth image as a third frame which is next frame after the second frame.

According to an embodiment, the processor may be configured to, based on identifying that the brightness value related to the fourth image is greater than or equal to the designated brightness value, refrain from synthesizing the fourth image with the third image.

According to an embodiment, the processor may be configured to identify that the first image includes a first visual object, corresponding to an external object, disposed on a first position within the first image. The processor may be configured to identify that the second image includes a second visual object, corresponding to the external object, disposed on a second position distinct from the first position within the second image. The processor may be configured to obtain, based on synthesizing the first image and the second image, the third image including the first visual object and the second visual object.

According to an embodiment, the processor may be configured to identify that a size of the first visual object corresponds to a size of the second visual object. The processor may be configured to, based on identifying that the size of the first visual object corresponds to the size of the second visual object, identify that a distance between the first position and the second position is less than or equal to a designated distance. The processor may be configured to, based on identifying that the distance between the first position and the second position is less than or equal to the designated distance, obtain the third image including the first visual object and the second visual object.

According to an embodiment, the processor may be configured to, based on an alpha-blending algorithm, synthesize the first image and the second image. A brightness value of the first visual object included in the third image may be set greater than a brightness value of the second visual object included in the third image.

According to an embodiment, the processor may be configured to identify the first visual object corresponding to the external object among a plurality of visual objects included in the first image. The processor may be configured to identify the second visual object corresponding to the external object among a plurality of visual objects included in the second image.

According to an embodiment, the processor may be configured to identify a shape and a brightness value of each of the plurality of objects included in the first image. The processor may be configured to identify, based on the shape and the brightness value of each of the plurality of objects, the first visual object which satisfies a designated condition among the plurality of objects.

According to an embodiment, the processor may be configured to remove remaining visual objects excluding the first visual object among the plurality of objects included in the first image and remaining visual objects excluding the second visual object among the plurality of objects included in the second image, from the third image.

According to an embodiment, the processor may be configured to, after the third image constitutes the second frame, obtain, based on the exposure time set as the first time interval, a fourth image using the camera. The processor may be configured to store, in the memory, a fifth image obtained based on synthesizing the third image and the fourth image. The processor may be configured to, after the fifth image is stored, obtain, based on the exposure time set as the first time, a sixth image using the camera. The processor may be configured to, based on synthesizing the fifth image and the sixth image, obtain a seventh image. The processor may be configured to configure the seventh image as a third frame which is next frame after the second frame.

According to an embodiment, a method of an electronic device may comprise identifying, based on capability information of an image sensor of a camera of the electronic device, maximum exposure time of the camera as a first time interval. The method may comprise obtaining, based on exposure time set as the first time interval, a first image using the camera. The method may comprise identifying a second image constituting a first frame stored in memory of the electronic device. The method may comprise obtaining, based on synthesizing the first image and the second image, a third image. The method may comprise, based on configuring the third image as a second frame which is next frame after the first frame, obtaining video data consisting of a plurality of fames including the first frame and the second frame.

According to an embodiment, the method may comprise obtaining the first image by processing data obtained using the camera during a second time interval distinct from the first time interval based on the exposure time set as the first time interval.

According to an embodiment, the method may comprise obtaining, based on configuring one frame per a third time interval including the first time interval and the second time interval, the video data consisting of a plurality of fames. The video data may be set to be played at 30 frames per second.

According to an embodiment, the method may comprise after the third image constitutes the second frame, obtaining, based on the exposure time set as the first time interval, a fourth image using the camera. The method may comprise, based on identifying that a brightness value related to the fourth image is greater than or equal to a designated brightness value, configuring the fourth image as a third frame which is next frame after the second frame.

According to an embodiment, the method may comprise identifying that the first image includes a first visual object, corresponding to an external object, disposed on a first position within the first image. The method may comprise identifying that the second image includes a second visual object, corresponding to the external object, disposed on a second position distinct from the first position within the second image. The method may comprise obtaining, based on synthesizing the first image and the second image, the third image including the first visual object and the second visual object.

According to an embodiment, the method may comprise identifying that a size of the first visual object corresponds to a size of the second visual object. The method may comprise, based on identifying that the size of the first visual object corresponds to the size of the second visual object, identifying that a distance between the first position and the second position is less than or equal to a designated distance. The method may comprise, based on identifying that the distance between the first position and the second position is less than or equal to the designated distance, obtaining the third image including the first visual object and the second visual object.

According to an embodiment, the method may comprise, based on an alpha-blending algorithm, synthesizing the first image and the second image. A brightness value of the first visual object included in the third image may be set greater than a brightness value of the second visual object included in the third image.

According to an embodiment, the method may comprise, after the third image constitutes the second frame, obtaining, based on the exposure time set as the first time interval, a fourth image using the camera. The method may comprise storing, in the memory, a fifth image obtained based on synthesizing the third image and the fourth image. The method may comprise, after the fifth image is stored, obtaining, based on the exposure time set as the first time, a sixth image using the camera. The method may comprise, based on synthesizing the fifth image and the sixth image, obtaining a seventh image. The method may comprise configuring the seventh image as a third frame which is next frame after the second frame.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored ain a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a camera including an image sensor;
memory; and
a processor operably coupled with the camera and the memory, wherein the processor is configured to:
identify, based on capability information of the image sensor, maximum exposure time of the camera as a first time interval,
obtain, based on exposure time set as the first time interval, a first image using the camera,
identify a second image constituting a first frame stored in the memory,
obtain, based on synthesizing the first image and the second image, a third image, and
based on configuring the third image as a second frame which is next frame after the first frame, obtain video data consisting of a plurality of fames including the first frame and the second frame.

2. The electronic device of claim 1, wherein the processor is further configured to obtain the first image by processing data obtained using the camera during a second time interval distinct from the first time interval based on the exposure time set as the first time interval.

3. The electronic device of claim 2, wherein the processor is further configured to obtain, based on configuring one frame per a third time interval including the first time interval and the second time interval, the video data consisting of a plurality of fames, and
wherein the video data is set to be played at 30 frames per second.

4. The electronic device of any one of claims 1 to 3, wherein the processor is further configured to:
after the third image constitutes the second frame, obtain, based on the exposure time set as the first time interval, a fourth image using the camera, and
based on identifying that a brightness value related to the fourth image is greater than or equal to a designated brightness value, configure the fourth image as a third frame which is next frame after the second frame.

5. The electronic device of claim 4, wherein the processor is further configured to, based on identifying that the brightness value related to the fourth image is greater than or equal to the designated brightness value, refrain from synthesizing the fourth image with the third image.

6. The electronic device of any one of claims 1 to 5, wherein the processor is further configured to:
identify that the first image includes a first visual object, corresponding to an external object, disposed on a first position within the first image,
identify that the second image includes a second visual object, corresponding to the external object, disposed on a second position distinct from the first position within the second image, and
obtain, based on synthesizing the first image and the second image, the third image including the first visual object and the second visual object.

7. The electronic device of claim 6, wherein the processor is further configured to:
identify that a size of the first visual object corresponds to a size of the second visual object,
based on identifying that the size of the first visual object corresponds to the size of the second visual object, identify that a distance between the first position and the second position is less than or equal to a designated distance, and
based on identifying that the distance between the first position and the second position is less than or equal to the designated distance, obtain the third image including the first visual object and the second visual object.

8. The electronic device of any one of claims 6 to 7, wherein the processor is further configured to, based on an alpha-blending algorithm, synthesize the first image and the second image, and
wherein a brightness value of the first visual object included in the third image is set greater than a brightness value of the second visual object included in the third image.

9. The electronic device of any one of claims 6 to 8, wherein the processor is further configured to:
identify the first visual object corresponding to the external object among a plurality of visual objects included in the first image, and
identify the second visual object corresponding to the external object among a plurality of visual objects included in the second image.

10. The electronic device of claim 9, wherein the processor is further configured to:
identify a shape and a brightness value of each of the plurality of objects included in the first image, and
identify, based on the shape and the brightness value of each of the plurality of objects, the first visual object which satisfies a designated condition among the plurality of objects.

11. The electronic device of any one of claims 9 to 10, wherein the processor is further configured to:
remove remaining visual objects excluding the first visual object among the plurality of objects included in the first image and remaining visual objects excluding the second visual object among the plurality of objects included in the second image, from the third image.

12. The electronic device of any one of claims 1 to 11, wherein the processor is further configured to:
after the third image constitutes the second frame, obtain, based on the exposure time set as the first time interval, a fourth image using the camera,
store, in the memory, a fifth image obtained based on synthesizing the third image and the fourth image,
after the fifth image is stored, obtain, based on the exposure time set as the first time, a sixth image using the camera,
based on synthesizing the fifth image and the sixth image, obtain a seventh image, and
configure the seventh image as a third frame which is next frame after the second frame.

13. A method of an electronic device, comprising:
identifying, based on capability information of an image sensor of a camera of the electronic device, maximum exposure time of the camera as a first time interval,
obtaining, based on exposure time set as the first time interval, a first image using the camera,
identifying a second image constituting a first frame stored in memory of the electronic device,
obtaining, based on synthesizing the first image and the second image, a third image, and
based on configuring the third image as a second frame which is next frame after the first frame, obtaining video data consisting of a plurality of fames including the first frame and the second frame.

14. The method of claim 13, wherein the method further comprises obtaining the first image by processing data obtained using the camera during a second time interval distinct from the first time interval based on the exposure time set as the first time interval.

15. The method of claim 14, wherein the method further comprises obtaining, based on configuring one frame per a third time interval including the first time interval and the second time interval, the video data consisting of a plurality of fames, and
wherein the video data is set to be played at 30 frames per second.
